# EUROPEAN PATENT APPLICATION

(11) **EP 4 617 885 A1**
(43) Date of publication of application: **17.09.2025**
(21) Application number: 25153369.1
(22) Date of filing: 22.01.2025
(51) Int. Cl.: G06F 12/14

(54) **APPARATUS AND METHOD FOR TRUSTED ACCESS TO EXPANSION MEMORY BY MULTIPLE POTENTIALLY HETEROGENEOUS COMPUTE NODES**

(30) Priority: 15.03.2024 US 202418607230
(71) Applicant: INTEL Corporation, Santa Clara, CA 95054 (US)
(72) Inventor: GUNASEKARAN, Vinothini, 560102 Bangalore (IN); RAJU, Venkatesh, 560053 Bangalore (IN)
(74) Representative: Samson & Partner Patentanwälte mbB

(57) **Abstract**

Multiple roots of trust are described under a super Root of trust (SROT). One embodiment includes: cores of a host processor; a host processor memory subsystem to provide access to a host processor memory; a home agent to provide access by the cores to the host processor memory subsystem and an expansion memory subsystem, a source address decoder to decode memory requests generated from the plurality of cores to determine whether the memory requests are to be directed to the host processor memory subsystem or the expansion memory subsystem. Host-based security circuitry encrypts and decrypts memory requests directed to the expansion memory subsystem, the host-based security circuitry to perform the encryption and decryption based on a second key stored in a cache maintained by the host-based security circuitry.

## Description

### TECHNICAL FIELD

The disclosure relates generally to computer systems. More specifically, an embodiment of the disclosure relates to an apparatus and method for providing trusted access to expansion memory by multiple potentially heterogeneous compute nodes.

### BACKGROUND

A processor, or set of processors, executes instructions from an instruction set, e.g., the instruction set architecture (ISA). The instruction set is the part of the computer architecture related to programming, and generally includes the native data types, instructions, register architecture, addressing modes, memory architecture, interrupt and exception handling, and external input and output (I/O).

### BRIEF DESCRIPTION OF THE DRAWINGS

**FIG. 1** is a block diagram of a portion of a data center architecture in accordance with an embodiment.
**FIG. 2** is a block diagram of a switch in accordance with an embodiment.
**FIG.** 3 is a flow diagram of a method in accordance with an embodiment.
**FIG. 4** is a flow diagram of a method in accordance with another embodiment.
**FIG. 5** illustrates an example implementation of a computing system including a host processor and an accelerator coupled by a link.
**FIG. 6** illustrates an example implementation of a computing system including two or more interconnected processor devices.
**FIG. 7** illustrates a representation of an example port of a device including a layered stack.
**FIGS. 8A-8C** are simplified block diagrams illustrating example implementations of interfaces utilizing example adapters.
**FIG. 9** illustrates one embodiment of an expansion memory device coupled to a host processor.
**FIG. 10** illustrates an apparatus for determining a path for a memory request.
**FIGS. 11A-B** illustrate one embodiment of switching circuitry including a microcontroller and a lookup table for allocating and deallocating logical expansion memory devices.
**FIG. 12** illustrates a method in accordance with embodiments of the invention.
**FIG. 13** illustrates a specific implementation of one embodiment of the invention.
**FIGS. 14A-B** illustrate a specific implementation operable with Type 2 and Type 3 CXL devices.

### DETAILED DESCRIPTION

In various embodiments, a system may have a memory space that is dynamically configurable to include multiple independent memory domains, each of which can be dynamically created and updated. In addition, each of these independent memory domains may be dynamically controlled to be coherent or non-coherent, and can be dynamically updated to switch coherence status. To this end, switching circuitry within the system, such as switches that couple multiple processors, devices, memory and so forth, may be configured to dynamically allocate memory ranges to given memory domains. In addition the switches may maintain and enforce coherency mechanisms when such memory domains are indicated to have a coherent status. As such, this switching circuitry may dynamically handle incoming memory requests differently depending on whether a request is directed to a coherent memory domain or a non-coherent memory domain. Furthermore, the switching circuitry may handle coherency operations differently depending upon, e.g., traffic conditions in the system. For example, a coherent memory domain may be allocated and may be associated with one or more fallback rules to provide for different coherency mechanisms to be used when high traffic conditions are present.

Although embodiments are not limited in this regard, example cloud-based edge architectures may communicate using interconnects and switches in accordance with a Compute Express Link (CXL) specification such as the CXL 1.1 Specification or any future versions, modifications, variations or alternatives to a CXL specification. Further, while an example embodiment described herein is in connection with CXL-based technology, embodiments may be used in other coherent interconnect technologies such as an IBM XBus protocol, an Nvidia NVLink protocol, an AMD Infinity Fabric protocol, cache coherent interconnect for accelerators (CCIX) protocol or coherent accelerator processor interface (OpenCAPI).

Many systems provide a single coherent memory domain such that all compute devices (e.g., multiple processor sockets) and add-on devices (such as accelerators or so forth) are in the same coherent domain. Such configuration may be beneficial to enable shared computing and shared memory across the processors. However, increasing the number of coherent agents also increases the amount of coherence traffic. As an example, adding four processor sockets to a system to take it from a 4-socket system to an 8-socket system can increase coherence traffic by a 3x amount, which can undesirably affect latency, and greater numbers of sockets increases this traffic even further. This is especially so when also considering add-on devices and accelerators, which may be part of this single coherent memory domain.

As such, embodiments can dynamically and at a fine-grained level control coherency of memory. In embodiments, a shared coherence domain-based protocol may communicate over CXL interconnects in a manner that is flexible and scalable. As a result, via a CXL switch, multiple servers or racks can converse in memory semantics with CXL.cache or CXL.mem semantics. With an embodiment, applications can implement coherency dynamically and independently using CXL.cache semantics.

When a memory device attached via a CXL link has coherency disabled, the memory device can be made local-only without coherence. As an example, an add-on accelerator with add-on memory or an add-on memory expansion card can be: (1) configured in "device bias" mode and not coherent with any other entity and used only exclusively by the device; or (2) configured in "host-bias" mode and made globally coherent with the rest of the platform.

In cloud server implementations such as a multi-tenant data center, a system may have multiple coherency domains, such as per tenant coherency. As an example, each of multiple (potentially a large number of different tenants) may be associated with a memory domain (or multiple memory domains). Note that these separate memory domains may be isolated from each other such that a first tenant allocated to a first memory domain cannot access a second memory domain allocated to a second tenant (and vice versa). In other cases, there may be more flexible relationships between tenants and memory domains. In embodiments, coherent domains are managed on a per tenant basis.

One example implementation may be in connection with a database server or database management system configured to run on a cloud-based architecture. In such a system there may be multiple nodes implemented, where at least some of the nodes have a segment called a main store that does not require coherence since it is read-only. This main store may consume a large percentage (e.g., 50%) of the total memory capacity used by the database. While other sections of the database may require coherence for particular transactions, embodiments can provide a fine-grained, flexible mechanism within the application to define coherence requirements. This dynamic and flexible approach provided in embodiments thus differs from a static, upfront, hard-partitioning at a node level or memory region level.

To realize this arrangement, embodiments provide mechanisms to expose to an application or other requester the ability to dynamically configure and update coherency status, among other aspects of a memory domain. For example, when allocating a memory region like the main store that does not require coherence, an application can specify a memory allocation request as follows: cxl-mmap([A,B], allocate, 800GB, NULL <coherence>, NULL <call-back>). With this example memory allocation request, a requester provides information regarding a memory range request type (allocate request), an amount of space requested, and indicators for a coherency status and call-back information (neither of which is active in this particular request).

However, while allocating a memory region that will be used for a transaction, the application can specify coherence and further define entities that are permitted access to this coherent memory domain (e.g., in terms of process address space identifiers (PASIDs), e.g., PASID2, PASID3, and PASID5). This is shown in the following memory allocation request: cxl-mmap([C,D], allocate, 100GB, PASID2,PASID3,PASID5, NULL <call-back>). Note that in addition, memory domains may be associated with a tenant ID that in turn can be mapped into one or more PASIDs, to provide per-tenant coherency. Note that in some implementations, a "tenant" may be defined as one instance of all processes. Embodiments may enable definition of a coherent domain as one of two options: (1) ID (tenant ID), which includes a set of PASIDs; and (2) PASID granularity (which can be identified by tenant ID and PASID).

Now one can also turn off coherence after a transaction is completed, by using the same memory allocation request, using a modify indicator rather than an allocate indicator as follows: cxl-mmap([C,D], modify, 100GB, NULL <coherence>, NULL <call-back>). The same mechanism can be used to turn on coherence later, for example, to update coherence only for PASID5, as follows: cxl-mmap([C,D], modify, 100GB, PASID5, NULL <call-back>).

As further shown above, these memory allocation and update requests may include an extension termed a "call-back," which can be used to specify CXL-based call-back rules. These rules may provide for fallback operations for handling coherency if one or more links are saturated. This is analogous to back-off mechanisms for locking, for example, where if a lock is not acquired, another code path or option is taken. As one example, a call-back option may call for using a software multi-phase commit protocol to implement coherence if a switch generates a call-back signal indicating that the interconnects are saturated due to coherence operations: cxl-mmap([C,D], modify, 100GB, PASID5, CALL-BACK CODEPATH *swcommitprotocol(C,D,PASID5)).

Another option for the call-back could be quality of service, where if the interconnects are saturated, a given PASID (e.g., PASID 2) receives high priority/dedicated switch credits (e.g., PASID 2 is performing the primary coherence-requiring operation, whereas PASID 3 and PASID5 are just collecting statistical analytics or doing garbage collection) as follows: cxl-mmap([C,D], modify, 100GB, PASID5, CALL-BACK QOS PASID 2).

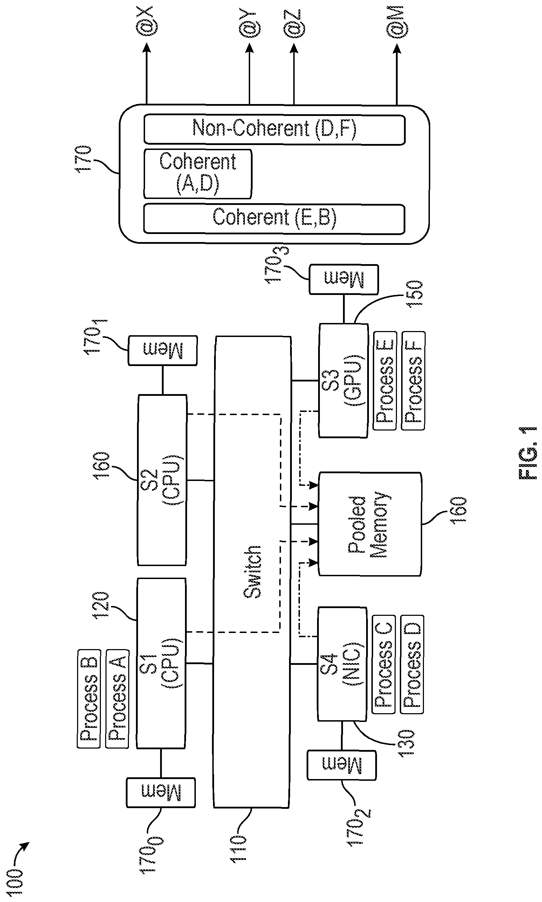

Referring now to FIG. 1, shown is a block diagram of a portion of a data center architecture in accordance with an embodiment. As shown in FIG. 1, system 100 may be a collection of components implemented as one or more servers of a data center. As illustrated, system 100 includes a switch 110, e.g., a CXL switch in accordance with an embodiment. In other implementations, switch 110 may be another type of coherent switch. Note however that in any event, switch 110 is implemented as a coherent switch and not an ethernet type of switch. By way of switch 110, which acts as a fabric, various components including one or more central processing units (CPUs) 120, 160, one or more special function units such as a graphics processing unit (GPU) 150, and a network interface circuit (NIC) 130 may communicate with each other. More specifically, these devices, each of which may be implemented as one or more integrated circuits, provide for execution of functions that communicate with other functions in other devices via one of multiple CXL communication protocols. For example, CPU 120 may communicate with NIC 130 via a CXL.io communication protocol. In turn, CPUs 120,160 may communicate with GPU 150 via a CXL.mem communication protocol. And, CPUs 120, 160 may communicate with each other and from CPU 160 to GPU 150 via a CXL.cache communication protocol, as examples. Switch 110 may include control circuitry that allows different memory domains to be dynamically allocated and updated (including coherency status) for devices and applications or services. For instance, different processes may request coherency across certain memory ranges while other processes may not need coherency at all.

As further shown in FIG 1, a system memory may be formed of various memory devices. In the embodiment shown, a pooled memory 160 is coupled to switch 110. Various components may access pooled memory 160 via switch 110. In addition, multiple portions of the system memory may couple directly to particular components. As illustrated, memory devices 170₀₋₃ are distributed such that various regions directly couple to corresponding CPUs 120, 160, NIC 130, and GPU 150.

As further illustrated in FIG. 1, in response to memory allocation requests issued by processes, various coherent and non-coherent memory domains may be maintained within memory 170. Understand while shown at this high level in the embodiment of FIG 1, many variations and alternatives are possible.

Via an interface in accordance with an embodiment, software (e.g., a system stack) enables specification dynamically of these types of memory domains. In an embodiment, a memory domain is composed by a set of memory regions with address ranges, list of PASIDs associated with the memory domain and the type of coherency (e.g., coherent, non-coherent, read only etc.). Memory domains at the device level (e.g., GPU and CPU) can be defined as well. In other cases, a memory domain can be mapped into a single address range, where a tenant may have multiple memory domains.

Circuitry within a switch may implement the aforementioned coherency domains. To this end, the circuitry may be configured to intercept snoops and other CXL.cache flows and determine whether they need to cross the switch or not. In a negative case, it returns a corresponding CXL.cache response to inform the snoop requestor that the address is not hosted in the target platform or device for that request.

Note that dynamic coherent memory domains as described herein may be implemented without any modification on any coherency agent (such as a caching agent (CA) in the CPU).

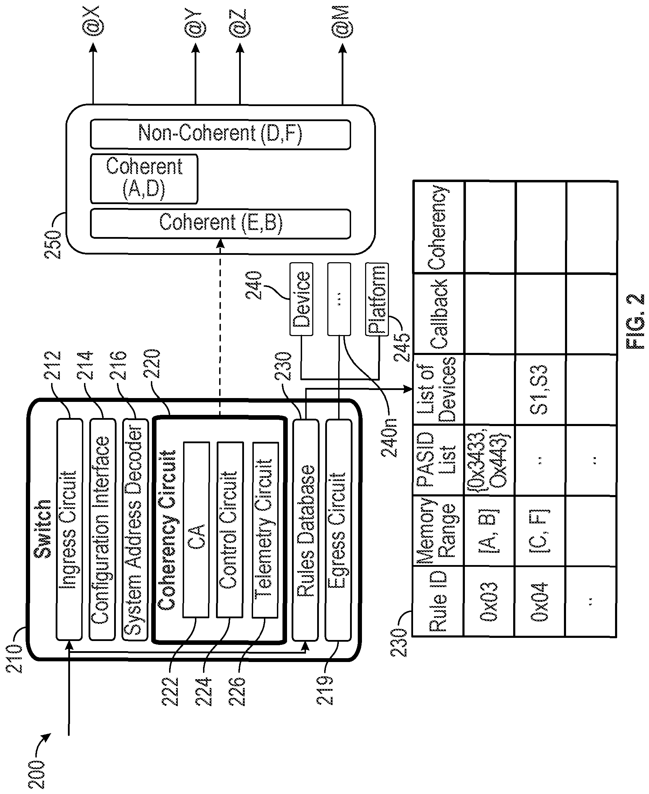

Referring now to FIG. 2 shown is a block diagram of a switch in accordance with an embodiment. As shown in FIG. 2, switch 200 includes various circuitry including an ingress circuit 212, via which incoming requests are received, and an egress circuit 219, via which outgoing communications are sent. For purposes of describing the dynamic coherency mechanisms herein, switch 210 further includes a configuration interface 214 which may expose to applications the capabilities herein, including the ability to dynamically instantiate and update coherent memory domains. To determine whether an incoming request is for a coherent domain, a coherency circuit 220 may leverage information in a system address decoder 218, which may decode incoming system addresses in requests.

As further shown in the inset in FIG. 2, coherency circuit 220 includes a caching agent (CA) circuit 222, which may perform snoop processing and other coherency processing. More specifically, when a control circuit 224 determines that a request is to be coherently processed, it may enroll CA circuit 222 to perform coherency processing. This determination may be based at least in part on information maintained by a telemetry circuit 226, which may track traffic through the system, including interconnect bandwidth levels.

As further shown in FIG. 2, a rules database 230 is provided within switch 210, which may store information regarding different memory domains. As shown, rules database 230 includes multiple entries, each associated with a given memory domain. As illustrated, each entry includes a plurality of fields, including a rule ID field, a memory range field, a PASID list field, a device list field, a call-back field, and a coherency status field. These different fields may be populated in response to a memory allocation request, and may further be updated in response to additional requests for updates so forth.

Embodiments may be applicable to multi-tenant usages in cloud and edge computing, and cloud native applications with many microservices that do not have global coherence. For further illustration purposes, multiple independent CXL-coherence domains associated with different tenants can be isolated in a system memory. For example, one could have an application deploying containers or virtual machines that specify the following domains:
Domain 1 - VMs A, B, C = compute devices S1 ,S2,S3,A3 sharing memory range [x,y]
Domain 2- VMs D, E = compute devices S3, S4, S5 , A4 sharing memory range [z,t]
Domain 3 - shared memory between VMs C and D - all compute devices
App A generates snoop @X1 [x,y], the CXL switch only snoops S1,S2,S3, A3.

As shown in FIG. 2, these different memory domains that are shared across the platforms are not coherent across all compute devices. For each memory range, a set of targets to snoop are specified, such as shown with Domains 1, 2, and 3 above. Further, some regions of memory may be read-only, like a main store of a database, which may account for a large percentage of memory capacity usage. There is no need to snoop or have coherence for such defined regions.

With this arrangement, switch 210 may provide coherency quality of service (QoS) between coherent domains and within coherent domains. In this way, switch 210 exposes interfaces that can be used by: (1) the infrastructure owner to specify what coherent QoS (in terms of priority or coherent transactions per second) are associated to each coherent domain; and (2) the coherent domain owner to specify what is the level of QoS associated between coherency flows between each of the participants of a domain.

Via telemetry circuit 226, active telemetry coherency saturation awareness is realized. This allows software stacks to be aware how access to different objects within a coherent domain may experience performance degradation. In an embodiment, telemetry circuit 226 may track the saturation of the various paths between each of the participants of the domain and the various objects and notify each of them depending on provided monitoring rules.

In an embodiment for implementing monitoring and quality of services flows, switch 210 can include content addressable memory (CAM)-based types of structures that can be tagged by object ID in order to track the access and apply QoS enforcement. To this end, system address decoder 216 tracks the different objects and maps a coherency request (such as a read request) to that object. Hence, on a particular coherency request, switch 210 may use SAD 216 to discover to what coherent domain and object it belongs; identify the QoS achieved and specified and determine when to process the request. Note that if it is determined to not yet process the request, then it can be stored in a queue. When a request is processed, it may proceed if the domain is coherent. If it is not coherent, switch 210 may execute a "fake" flow and respond to the originator with a response expected when a target does not have the line. Further, switch 210 directly sends the request to the target via egress circuit 219. As one example, when faking the flow the switch may return a global observation signal (e.g., ACK GO) (indicating to the originator that no one has that line).

Switch 210, via configuration interface 214, may provide for registering a new coherent domain. In an embodiment, this interface allows specifying identifying of the address domain; and memory range that belongs to that memory domain. Here the assumption is that the physical memory range (from 0..N) is mapped to all the different addressable memories in the system; the interface also enables specification of elements within the memory domain, a list of process address ID (PASID) that belong to the memory domain, and optionally the list of devices within the memory domain. Configuration interface 214 further may enable changing or removing a memory domain.

Coherency circuit 220 may be configured to intercept CXL.cache requests and determine whether to intercept them or not. To this end, control circuit 224 may, for a request, use system address decoder 218 to identify if there is any coherency domain mapped into a particular address space that matches the memory address in the request. If no coherent domain is found, the request exits egress circuit 219 towards the final target.

If one or multiple domains are found, per each of them coherency circuit 220 may: check if the PASID included in the request maps into that domain. If so, the request exits egress circuit 219 towards the final target. If not, coherency circuit 220 may drop the snoop or memory CXL.cache request. Coherency circuit 220 implements the coherency response corresponding to that particular CXL.cache request. For instance, respond invalid.

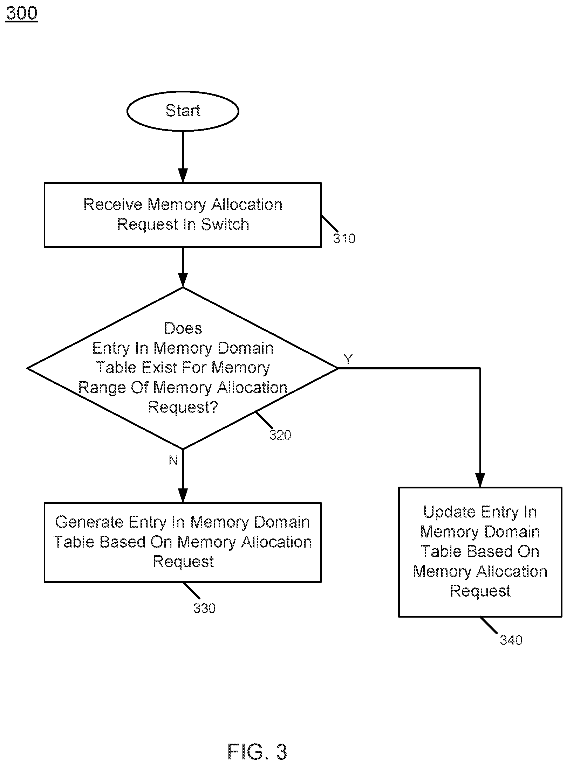

Referring now to FIG. 3, shown is a flow diagram of a method in accordance with an embodiment. As shown in FIG. 3, method 300 is a method for generating and updating memory properties in response to a memory allocation request. As such, method 300 may be performed by switch circuitry, such as a coherency circuit within a switch in accordance with an embodiment. As such, method 300 may be performed by hardware circuitry, firmware, software, and/or combinations thereof.

As illustrated, method 300 begins by receiving a memory allocation request in a switch (block 310). As an example, an application such as a VM, process or any other software entity may issue this request, which may include various information. Although embodiments are not limited in this regard, example information in the request may include memory range information, coherency status, address space identifier information and so forth.

Next control passes to diamond 320 where it is determined whether an entry already exists in a memory domain table for a memory range of this memory allocation request. If not, control passes to block 330 where an entry in this table may be generated. As one example, the entry may include the fields described above with regard to FIG. 2. Otherwise if it is determined that an entry already exists, control passes to block 340 where the entry may be updated. For example, a coherency status may be changed, e.g., making a coherent domain a non-coherent domain, such as after a transaction completes, deleting a memory domain such as when application terminates or so forth. While shown at this high level in the embodiment of FIG. 3, many variations and alternatives are possible.

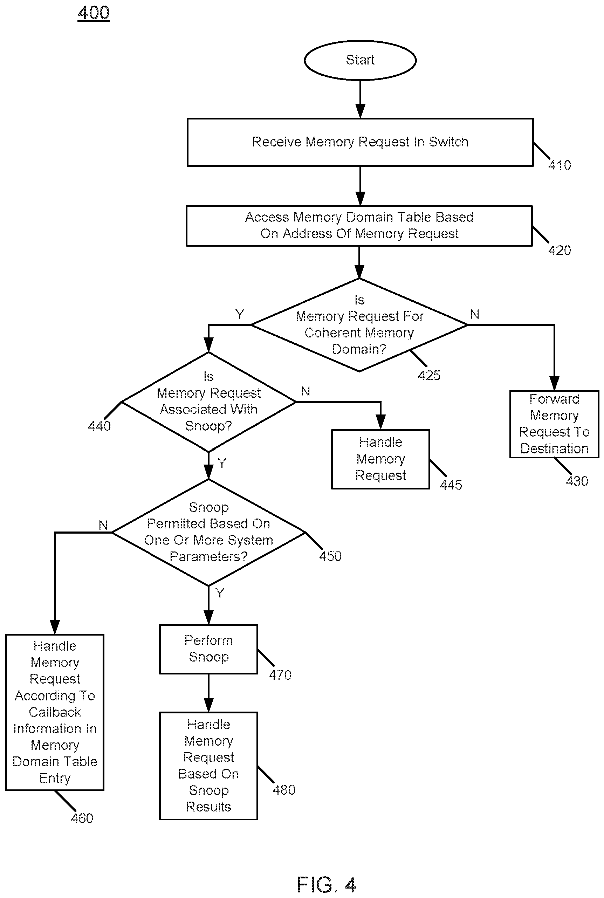

Referring now to FIG. 4, shown is a flow diagram of a method in accordance with another embodiment. As shown in FIG. 4, method 400 is a method for handling an incoming memory request in a switch. As such, method 400 may be performed by various circuitry within the switch. As such, method 400 may be performed by hardware circuitry, firmware, software, and/or combinations thereof.

Method 400 begins by receiving a memory request in the switch (block 410). Assume for purposes of discussion that this memory request is for reading data. This read request includes an address at which requested data is located. Next at block 420 a memory domain table may be accessed based on an address of the memory request, e.g., to identify an entry in the table associated with a memory domain including the address.

At diamond 425 it is determined whether this memory request is for a coherent memory domain. This determination may be based on a coherency status indicator present in a coherency status field of the relevant entry of the memory domain table. If not, control passes to block 430 where the memory request is forwarded to the destination location without further processing within the switch, since this request is directed to a non-coherent domain.

Still with reference to FIG. 4 if it is determined that the request is for a coherent memory domain, control passes to diamond 440 to determine whether the memory request is associated with a snoop. This determination may be based on whether this request is for a read, in which case snoop processing may be performed. Other memory requests, such as a write request, may be directly handled without snoop processing (block 445).

Control next passes to diamond 450 to determine whether snoop processing is permitted. This determination may be based on one or more system parameters, such as interconnect status. If it is determined that snoop processing is not permitted, such as where high interconnect traffic is present, control passes to block 460. At block 460, the memory request may be handled according to call-back information. More specifically, the relevant entry in the memory domain table may be accessed to determine a fallback processing mechanism that may be used for handling snoop processing. In this way, reduced interconnect traffic may be realized.

Still with reference to FIG. 4, if it is determined that snoop processing is permitted at diamond 450, control passes to block 470 where snoop processing is performed to determine the presence and status of requested data in various distributed caches and other memory structures. Next at block 480, the memory request may be handled based on snoop results. For example, when it is determined that a most recent copy of the data is valid, the read request may be performed. Or on an indication of dirty data, dirty data may be used to provide a read completion. While shown at this high level in the embodiment of FIG. 4, many variations and alternatives are possible.

A variety of interconnect architectures and protocols may utilize the concepts discussed herein. With advancements in computing systems and performance requirements, improvements to interconnect fabric and link implementations continue to be developed, including interconnects based on or utilizing elements of PCIe or other legacy interconnect platforms. In one example, Compute Express Link (CXL) has been developed, providing an improved, high-speed CPU-to-device and CPU-to-memory interconnect designed to accelerate next-generation data center performance, among other application. CXL maintains memory coherency between the CPU memory space and memory on attached devices, which allows resource sharing for higher performance, reduced software stack complexity, and lower overall system cost, among other example advantages. CXL enables communication between host processors (e.g., CPUs) and a set of workload accelerators (e.g., graphics processing units (GPUs), field programmable gate array (FPGA) devices, tensor and vector processor units, machine learning accelerators, purpose-built accelerator solutions, among other examples). Indeed, CXL is designed to provide a standard interface for high-speed communications, as accelerators are increasingly used to complement CPUs in support of emerging computing applications such as artificial intelligence, machine learning and other applications.

A CXL link may be a low-latency, high-bandwidth discrete or on-package link that supports dynamic protocol multiplexing of coherency, memory access, and input/output (I/O) protocols. Among other applications, a CXL link may enable an accelerator to access system memory as a caching agent and/or host system memory, among other examples. CXL is a dynamic multi-protocol technology designed to support a vast spectrum of accelerators. CXL provides a rich set of protocols that include I/O semantics similar to PCIe (CXL.io), caching protocol semantics (CXL.cache), and memory access semantics (CXL.mem) over a discrete or on-package link. Based on the particular accelerator usage model, all of the CXL protocols or only a subset of the protocols may be enabled. In some implementations, CXL may be built upon the well-established, widely adopted PCIe infrastructure (e.g., PCIe 5.0), leveraging the PCIe physical and electrical interface to provide advanced protocol in areas include I/O, memory protocol (e.g., allowing a host processor to share memory with an accelerator device), and coherency interface.

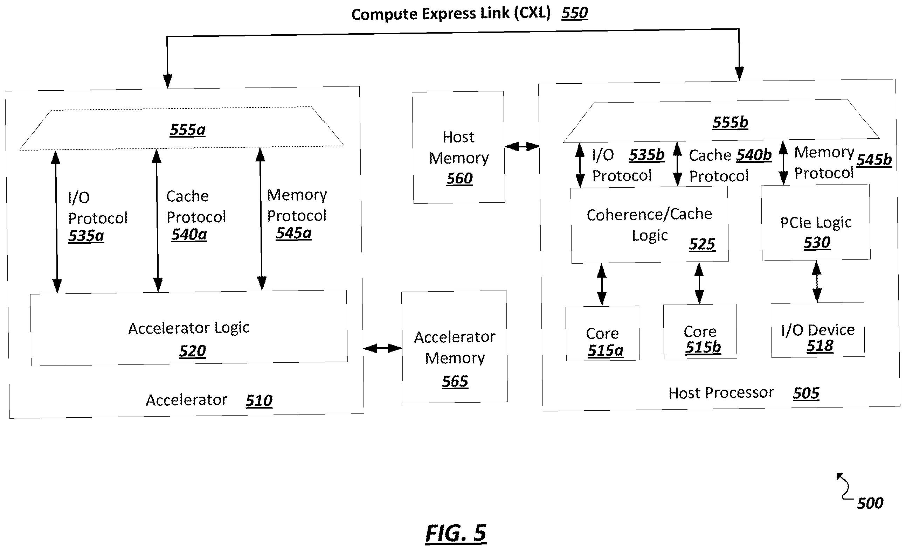

Turning to FIG. 5, a simplified block diagram 500 is shown illustrating an example system utilizing a CXL link 550. For instance, the link 550 may interconnect a host processor 505 (e.g., CPU) to an accelerator device 510. In this example, the host processor 505 includes one or more processor cores (e.g., 515a-b) and one or more I/O devices (e.g., 518). Host memory (e.g., 560) may be provided with the host processor (e.g., on the same package or die). The accelerator device 510 may include accelerator logic 520 and, in some implementations, may include its own memory (e.g., accelerator memory 565). In this example, the host processor 505 may include circuitry to implement coherence/cache logic 525 and interconnect logic (e.g., PCIe logic 530). CXL multiplexing logic (e.g., 555a-b) may also be provided to enable multiplexing of CXL protocols (e.g., I/O protocol 535a-b (e.g., CXL.io), caching protocol 540a-b (e.g., CXL.cache), and memory access protocol 545a-b (CXL.mem)), thereby enabling data of any one of the supported protocols (e.g., 535a-b, 540a-b, 545a-b) to be sent, in a multiplexed manner, over the link 550 between host processor 505 and accelerator device 510.

In some implementations, a Flex BusTM port may be utilized in concert with CXL-compliant links to flexibly adapt a device to interconnect with a wide variety of other devices (e.g., other processor devices, accelerators, switches, memory devices, etc.). A Flex Bus port is a flexible high-speed port that is statically configured to support either a PCIe or CXL link (and potentially also links of other protocols and architectures). A Flex Bus port allows designs to choose between providing native PCIe protocol or CXL over a high-bandwidth, off-package link. Selection of the protocol applied at the port may happen during boot time via auto negotiation and be based on the device that is plugged into the slot. Flex Bus uses PCIe electricals, making it compatible with PCIe retimers, and adheres to standard PCIe form factors for an add-in card.

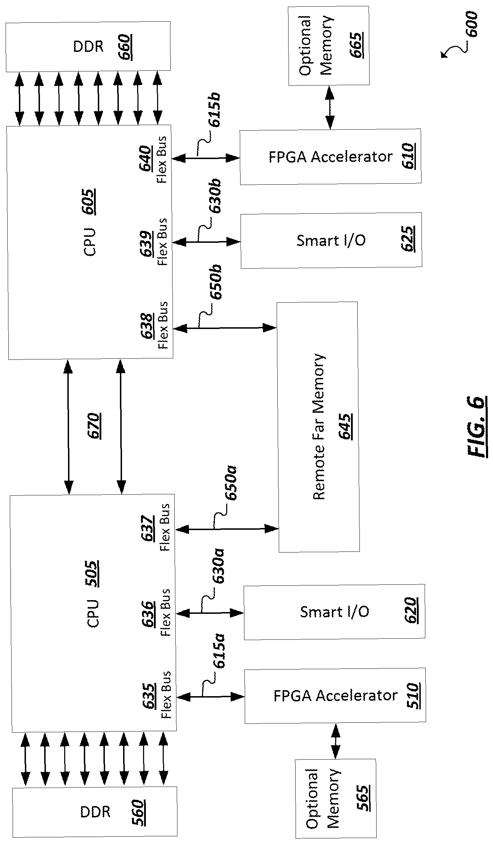

Turning to FIG. 6, an example is shown (in simplified block diagram 600) of a system utilizing Flex Bus ports (e.g., 635-640) to implement CXL (e.g., 615a-b, 650a-b) and PCIe links (e.g., 630a-b) to couple a variety of devices (e.g., 510, 610, 620, 625, 645, etc.) to a host processor (e.g., CPU 505, 605). In this example, a system may include two CPU host processor devices (e.g., 505, 605) interconnected by an interprocessor link 670 (e.g., utilizing a UltraPath Interconnect (UPI), Infinity FabricTM, or other interconnect protocol). Each host processor device 505, 605 may be coupled to local system memory blocks 560, 660 (e.g., double data rate (DDR) memory devices), coupled to the respective host processor 505, 605 via a memory interface (e.g., memory bus or other interconnect).

As discussed above, CXL links (e.g., 615a, 650b) may be utilized to interconnect a variety of accelerator devices (e.g., 510, 610). Accordingly, corresponding ports (e.g., Flex Bus ports 635, 640) may be configured (e.g., CXL mode selected) to enable CXL links to be established and interconnect corresponding host processor devices (e.g., 505, 605) to accelerator devices (e.g., 510, 610). As shown in this example, Flex Bus ports (e.g., 636, 639), or other similarly configurable ports, may be configured to implement general purpose I/O links (e.g., PCIe links) 630a-b instead of CXL links, to interconnect the host processor (e.g., 505, 605) to I/O devices (e.g., smart I/O devices 620, 625, etc.). In some implementations, memory of the host processor 505 may be expanded, for instance, through the memory (e.g., 565, 665) of connected accelerator devices (e.g., 510, 610), or memory extender devices (e.g., 645, connected to the host processor(s) 505, 605 via corresponding CXL links (e.g., 650a-b) implemented on Flex Bus ports (637, 638), among other example implementations and architectures.

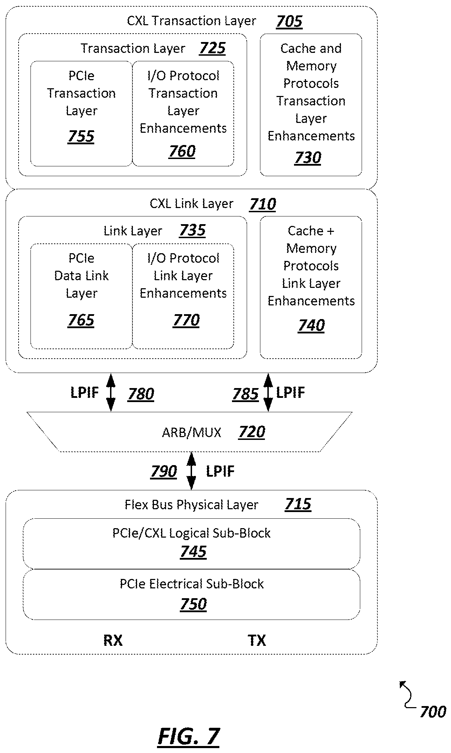

FIG. 7 is a simplified block diagram illustrating an example port architecture 700 (e.g., Flex Bus) utilized to implement CXL links. For instance, Flex Bus architecture may be organized as multiple layers to implement the multiple protocols supported by the port. For instance, the port may include transaction layer logic (e.g., 705), link layer logic (e.g., 710), and physical layer logic (e.g., 715) (e.g., implemented all or in-part in circuitry). For instance, a transaction (or protocol) layer (e.g., 705) may be subdivided into transaction layer logic 725 that implements a PCIe transaction layer 755 and CXL transaction layer enhancements 760 (for CXL.io) of a base PCIe transaction layer 755, and logic 730 to implement cache (e.g., CXL.cache) and memory (e.g., CXL.mem) protocols for a CXL link. Similarly, link layer logic 735 may be provided to implement a base PCIe data link layer 765 and a CXL link layer (for CXl.io) representing an enhanced version of the PCIe data link layer 765. A CXL link layer 710 may also include cache and memory link layer enhancement logic 740 (e.g., for CXL.cache and CXL.mem).

Continuing with the example of FIG. 7, a CXL link layer logic 710 may interface with CXL arbitration/multiplexing (ARB/MUX) logic 720, which interleaves the traffic from the two logic streams (e.g., PCIe/CXL.io and CXL.cache/CXL.mem), among other example implementations. During link training, the transaction and link layers are configured to operate in either PCIe mode or CXL mode. In some instances, a host CPU may support implementation of either PCIe or CXL mode, while other devices, such as accelerators, may only support CXL mode, among other examples. In some implementations, the port (e.g., a Flex Bus port) may utilize a physical layer 715 based on a PCIe physical layer (e.g., PCIe electrical PHY 750). For instance, a Flex Bus physical layer may be implemented as a converged logical physical layer 745 that can operate in either PCIe mode or CXL mode based on results of alternate mode negotiation during the link training process. In some implementations, the physical layer may support multiple signaling rates (e.g., 8 GT/s, 16 GT/s, 32 GT/s, etc.) and multiple link widths (e.g., x16, x8, x4, x2, x1, etc.). In PCIe mode, links implemented by the port 700 may be fully compliant with native PCIe features (e.g., as defined in the PCIe specification), while in CXL mode, the link supports all features defined for CXL. Accordingly, a Flex Bus port may provide a point-to-point interconnect that can transmit native PCIe protocol data or dynamic multi-protocol CXL data to provide I/O, coherency, and memory protocols, over PCIe electricals, among other examples.

The CXL I/O protocol, CXL.io, provides a non-coherent load/store interface for I/O devices. Transaction types, transaction packet formatting, credit-based flow control, virtual channel management, and transaction ordering rules in CXL.io may follow all or a portion of the PCIe definition. CXL cache coherency protocol, CXL.cache, defines the interactions between the device and host as a number of requests that each have at least one associated response message and sometimes a data transfer. The interface consists of three channels in each direction: Request, Response, and Data.

The CXL memory protocol, CXL.mem, is a transactional interface between the processor and memory and uses the physical and link layers of CXL when communicating across dies. CXL.mem can be used for multiple different memory attach options including when a memory controller is located in the host CPU, when the memory controller is within an accelerator device, or when the memory controller is moved to a memory buffer chip, among other examples. CXL.mem may be applied to transaction involving different memory types (e.g., volatile, persistent, etc.) and configurations (e.g., flat, hierarchical, etc.), among other example features. In some implementations, a coherency engine of the host processor may interface with memory using CXL.mem requests and responses. In this configuration, the CPU coherency engine is regarded as the CXL.mem Master and the Mem device is regarded as the CXL.mem Subordinate. The CXL.mem Master is the agent which is responsible for sourcing CXL.mem requests (e.g., reads, writes, etc.) and a CXL.mem Subordinate is the agent which is responsible for responding to CXL.mem requests (e.g., data, completions, etc.). When the Subordinate is an accelerator, CXL.mem protocol assumes the presence of a device coherency engine (DCOH). This agent is assumed to be responsible for implementing coherency related functions such as snooping of device caches based on CXL.mem commands and update of metadata fields. In implementations, where metadata is supported by device-attached memory, it can be used by the host to implement a coarse snoop filter for CPU sockets, among other example uses.

In some implementations, an interface may be provided to couple circuitry or other logic (e.g., an intellectual property (IP) block or other hardware element) implementing a link layer (e.g., 710) to circuitry or other logic (e.g., an IP block or other hardware element) implementing at least a portion of a physical layer (e.g., 715) of a protocol. For instance, an interface based on a Logical PHY Interface (LPIF) specification to define a common interface between a link layer controller, module, or other logic and a module implementing a logical physical layer ("logical PHY" or "logPHY") to facilitate interoperability, design and validation re-use between one or more link layers and a physical layer for an interface to a physical interconnect, such as in the example of FIG. 7. Additionally, as in the example of FIG. 7, an interface may be implemented with logic (e.g., 735, 740) to simultaneously implement and support multiple protocols. Further, in such implementations, an arbitration and multiplexer layer (e.g., 720) may be provided between the link layer (e.g., 710) and the physical layer (e.g., 715). In some implementations, each block (e.g., 715, 720, 735, 740) in the multiple protocol implementation may interface with the other block via an independent LPIF interface (e.g., 780, 785, 790). In cases where bifurcation is supported, each bifurcated port may likewise have its own independent LPIF interface, among other examples.

While examples discussed herein may reference the use of LPIF-based link layer-logical PHY interfaces, it should be appreciated that the details and principles discussed herein may be equally applied to non-LPIF interfaces. Likewise, while some examples may reference the use of common link layer-logical PHY interfaces to couple a PHY to controllers implement CXL or PCIe, other link layer protocols may also make use of such interfaces. Similarly, while some references may be made to Flex Bus physical layers, other physical layer logic may likewise be employed in some implementations and make use of common link layer-logical PHY interfaces, such as discussed herein, among other example variations that are within the scope of the present disclosure.

Advancements in multi-chip packaging (MCP) technologies is allowing multiple silicon dies to be included within the same package. High density, low latency die-to-die interconnects, optimized for short reach, are capable of very low bit error rates (BER) (e.g., better than 1e-18). As such, these interconnects typically omit the overhead of serializer/deserializer (SERDES) circuitry, as well as synchronization related to package trace transmission and also omit the overhead of a complicated link training and status state machine (LTSSM) in the logical PHY.

Various, different protocols (e.g., CXL, PCIe, UltraPath Interconnect (UPI), In-Die Interconnect (IDI), and others) would benefit from a generic logical PHY interface to enable use of die-to-die interconnect, with the generic logical PHY interface (or adapter) serving as a transport mechanism that abstracts handshakes for initialization, power management and link training. For instance, traditional logical PHY implementations may require custom handshakes with a traditional logical PHY for each different protocol. In improved implementations, adapter circuitry may be provided to implement a generic logical PHY that allows upper protocol layers (e.g., link layers) to be transported over a variety of different die-to-die fabric blocks. The adapter may enable a raw bit stream to be transported over a die-to-die interface that uses a subset of a common link layer-to-PHY interface protocol (e.g., LPIF). Potentially any die-to-die electrical interface may make use of such an interface through the provision of such adapters. In some implementations, the adapter may utilize a subset of a defined common link layer-to-PHY interface (such as LPIF) with which existing link layer controllers are already configured to interoperate with (e.g., LPIF for PCIe/Flexbus/R-Link logPHY, etc.), among other example uses and advantages.

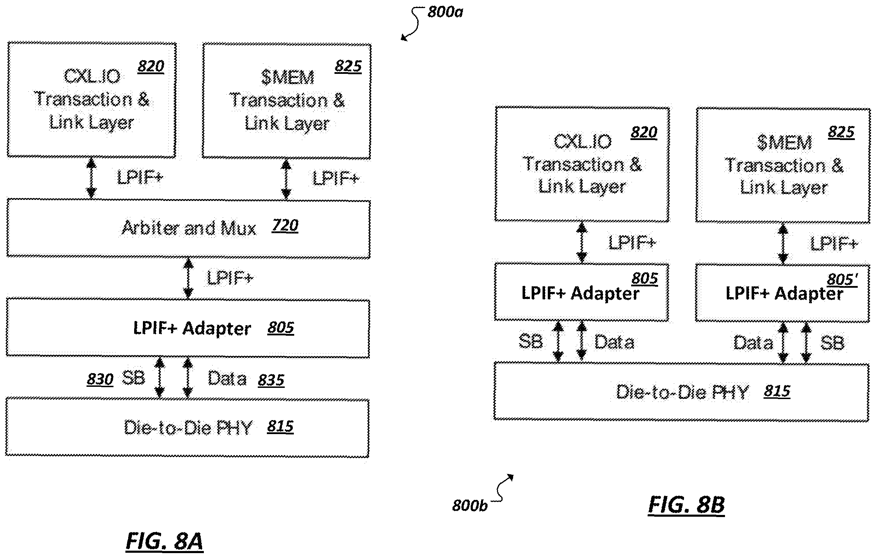

Turning to FIGS. 8A-8C, simplified block diagrams 800a-c are shown illustrating example implementations of interfaces utilizing adapter blocks (e.g., 805) to assist in implementing a common interface between various link layer blocks and various die-to-die PHY blocks. An example adapter (e.g., 805) may be provided to terminate, recondition, and gear data to be transmitted over the die-to-die interface 815. For instance, two or more dies may be provided on a package, with a die-to-die interconnect 815 (e.g., implemented as a high bandwidth die-to-die PHY IP block on the same package) serving as the interface between the two dies on the package. The adapter 805 may be provided with state machine logic to support and transition between a simplified set of states for a die-die environment. Additionally, the adapter may include logic to define an efficient sideband channel (e.g., 830) for various handshakes to be used to bring up the link, provide power management, and facilitate state transitions, among other example features. Such adapter devices may provide a generic and protocol-agnostic die-die interface that includes an in-band data channel (e.g., 835) and a sideband channel (e.g., 830). The adapter may be utilized to support a simplified logical PHY, which can result in lower latency and lower power for the interface, while enabling substantially more bandwidth per millimeter of die shoreline (or edge) due to dense I/O possible for a die-die interface. Additionally, the adapter may support simultaneous use by multiple protocols to allow such bandwidth to be scalable, among other example advantages.

As shown in FIGS. 8A-8C, various implementations may utilize an example adapter 805 (e.g., based on a common link layer-to-PHY interface (such as LPIF)) may be provided to implement a defined interface capable of transmitting and receiving data of the common link layer-to-PHY interface (e.g., LPIF data) over a die-to-die PHY 815. The link layer may have one or more functional pipes (e.g., 820, 825), with each pipe corresponding to an implemented protocol. In some implementations, such as illustrated in FIG. 8A, the traffic from each pipe 820, 825 may interface with a single, shared LPIF adapter 805. Further, in some implementations, such as in the example of FIG. 8A, an ARB/MUX 720 can be instantiated between a multi-protocol link layer (e.g., including link layer controllers 820, 825) and the adapter block 805, with the ARB/MUX 720 arbitrating between traffic from the different pipes (e.g., 820, 825) to drive to the adapter 805. The adapter may terminate and/or recondition the data of the common link layer-to-PHY interface for transfer over the die-to-die PHY (e.g., 815). The adapter 805 may also coordinate various handshakes with the link layer for power management (PM), and clock gating. The adapter 805 may also perform handshakes with the remote die when applicable for error/reset/power management propagation, among other example features. In short, use of an LPIF-based adapter 805, as in the example of FIGS. 8A-8C, allows link layer elements that already or natively support LPIF to seamlessly connect to a logical PHY for PCIe/CXL or to an LPIF adapter for die-to-die transport, with the LPIF adapter implementing a very light weight logical PHY for die-to-die communication.

The LPIF adapter 805 is to send a raw protocol stream over a multi-die interface for die-to-die operation. In some implementations, the die-to-die PHY 815 is implemented as a simplified high-density die-to-die PHY enabling lower latency and power performance than conventional die-to-die PHYs, among other examples. The LPIF adapter 805 may include digital logic used to interface with the PHY 815. The adapted 805 may implement a substantially simplified logical PHY for die-to-die transports. An LPIF adapter 805 may facilitate handshakes according to an LPIF interface while transferring raw data bits. The LPIF adapter 805 may implement a sideband channel 830 to the PHY 815 to exchange an adapter-to-adapter handshake. These handshakes could also be done via main band by assigning specific packets/flits unique to the LPIF adapter (and not used by the protocol), among other example implementations.

FIG. 8A shows an example implementation of an LPIF adapter 805 providing an interface between an ARB/MUX device 720 and a die-to-die PHY 815. The ARB/MUX circuitry 720 may include an LPIF interface to each one of multiple link layer functional pipes (provided through corresponding logic (e.g., 820, 825)). The ARB/MUX circuitry 720 may additionally include a single LPIF interface to couple to a single LPIF adapter (e.g., 805). In other implementations, ARB/MUX circuitry may be omitted, such as illustrated in the example of FIG. 8B. In the example of FIG. 8B, multiple link layer controllers (e.g., 820, 825) may be provided that, rather than being multiplexed to the same LPIF adapter, interface with a dedicated adapter instance (e.g., 805, 805'), which provides an interface and logical PHY between the link layer pipes and a die-to-die PHY 815. In the examples of FIGS. 8A-8B, there is a single cluster of the die-to-die PHY (e.g., an atomic unit, or cluster, of the die-to-die PHY such that all the signals within the cluster are synchronized natively).

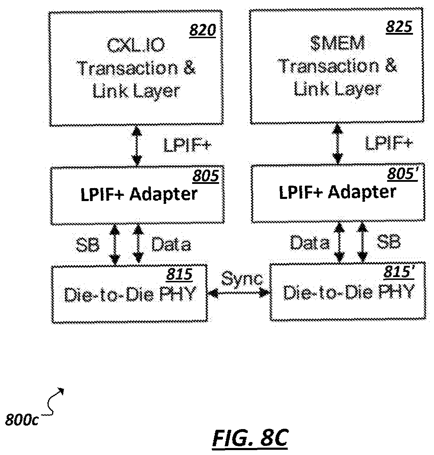

Multiple LPIF adapters (e.g., 805, 805') may be provided, for instance, to facilitate higher bandwidth applications (e.g., to send parallel transmission of CXL.io and CXL.cache/CXL.mem data). For instance, in FIG. 8C, bandwidth may be doubled (or otherwise multiplied) by providing multiple die-to-die PHY interfaces (e.g., 815, 815'). A respective adapter (e.g., 805, 805') may provide the corresponding logical PHY and interface between link layer controllers (e.g., 820, 825) and corresponding die-to-die PHY blocks (e.g., 815, 815'). In other instances, a single adapter may be provided as a logical PHY implementation and interface to multiple die-to-die PHY blocks (e.g., 815, 815'). In this example, the die-to-die PHY blocks (e.g., 815, 815') may be coupled (e.g., with a sideband or other channel (e.g., 830)) to enable additional synchronization between the die-to-die PHY blocks (e.g., 815, 815'), among other example features and implementations. Synchronization between different clusters of the die-to-die PHY (e.g., 815, 815') shows that the LPIF data width need not be tied to the die-to-die cluster width. Further, it should be appreciated that the examples illustrated in FIGS. 8A-8C are simplified examples and represent only a small fraction of the potential implementations, which may utilize adapters (such as described herein) providing interfaces to die-to-die PHYs.

Various signals and interactions may be defined between an adapter device and link layer element. Further, a sideband channel (e.g., 830) may be defined, in some implementations, to perform auxiliary communication with the remote die (e.g., a corresponding adapter on the remote die). In some instances, a unique flit/packet may be assigned for LPIF adapter communication with the remote die's LPIF adapter. Communication between the adapters (e.g., sideband handshakes or specialized packets) on the interconnected dies may be used, for instance, for link bring up and operation. The adapter may utilize a subset of signals defined in a link layer-to-PHY interface (e.g., LPIF) to implement the adapters lightweight logical PHY. Some signals may be omitted, for instance, in that, in some die-to-die applications, there may be no need for retraining (recovery) of the link once operational. Further, the scope of the adapter may be expanded to include it using the mechanisms that the corresponding link layer-to-PHY interface defines. Signaling between the adapter and the PHY block (e.g., die-to-die PHY) may be flexible and/or implementation specific, with the adapter configured to communicate according to the specific die-to-die PHY design.

In some implementations, an LPIF adapter and corresponding PHY blocks may scale with data width using single or multiple instantiations. In such cases, synchronization across multiple instantiations may be implemented in the PHY. Data transfer gear ratio can also be scaled based on PHY implementation. This may allow bridging die that operate on different frequencies, among other example applications. An example LPIF adapter can support serialization/deserialization, or simple throttling logic to make sure no data is lost when transferring over to a different frequency. In some implementations, an adapter may also implement, include, or otherwise instantiate clock crossing FIFO queues if required. Backpressure to the link layer may be controlled, for instance, using one of the signals defined in the corresponding link layer-to-PHY interface (e.g., pl_trdy in LPIF), among other examples. Further, error correction may be supported by adapters in some implementations, for instance, for additional link protection to ensure a particular BER requirement, among other examples. Error correction may be implemented in either (or both) the PHY block and the adapter, among other example features and implementations.

In some implementations, each instance of a link layer-to-PHY interface on a particular die may operate at the same clock frequency and within the same power domain. Additional FIFOs may be utilized for clock crossings if different clock frequencies or clock sources are used. If different power domains are used voltage isolation may be utilized, among other example features. Further, link layer logic and a corresponding adapter block may be within the same RESET domain. A secondary side adapter clock (e.g., PHY clock) may derived from the same phase-locked loop (PLL) circuit as primary side clock (LPIF clock). In some implementations, adapters may be configured such that some or all portions of the adapter are in an always-ON power domain to enable wake up from low power state (e.g., via sideband or mainband communication), among other example features.

In some implementations, it may be desirable to maintain security and isolation of information for a virtual machine from the hypervisor/virtual machine monitor (VMM), as well as from other virtual machine(s). Certain processors (e.g., a system-on-a-chip (SoC) including a processor) include hardware to assist in this isolation. A securely isolated VM is sometimes referred to as a "trust domain" (TD), "trusted VM" (TVM), or "secure VM". For the remainder of this disclosure, these terms are used interchangeably to refer to any VM or guest protected through hardware-based isolation. More generally, any trusted software component may be referred to as a "trusted execution environment" TEE.

Certain processors support an instruction set architecture (ISA) (e.g., ISA extension) to implement trust domains. For example, Intel^{®} trust domain extensions (Intel^{®} TDX) that utilize architectural elements to deploy hardware-isolated VMs. Similarly, Advanced Micro Devices (AMD) has released extensions for Secure Encrypted Virtualization (SEV) with Secure Nested Paging (SNP) (SEV-SNP) to deploy hardware-isolated VMs, referred to as "trusted VMs" or "secure VMs").

According to some examples, a hardware processor and its ISA may implement management components (e.g., referred to as a trust domain manager or trusted security manager) which manages the isolation of trusted VMs from the VMM/hypervisor and/or other non-secure software (e.g., on the host platform). For these examples, a hardware processor and its ISA implement trusted execution environments to enhance confidential computing by helping protect the trusted VMs from a broad range of software attacks and reducing the trusted computing base (TCB).

In some examples, a hardware processor and its ISA also support device I/O. For example, with an ISA (e.g., Intel^{®} TDX 2.0) supporting trust domain extensions (TDX) with device I/O (e.g., TDX-IO). For these examples, a hardware processor and its ISA that support device I/O enable the use assignment of a physical function (PF) and/or virtual function (VF) of a device to a specific TD.

An I/O device may be an accelerator and different types of accelerators may be used. For example, a first type of accelerator is an In-Memory Analytics accelerator (IAX). A second type of accelerator supports a set of transformation operations on memory, e.g., a data streaming accelerator (DSA). For example, the accelerator is to generate and test cyclic redundancy check (CRC) checksum or Data Integrity Field (DIF) to support storage and networking applications and/or for memory compare and delta generate/merge to support VM migration, VM fast check-pointing, and software managed memory deduplication usages. A third type of accelerator supports security, authentication, and compression operations (e.g., cryptographic acceleration and compression operations), e.g., a QuickAssist Technology (QAT) accelerator. A fourth type of accelerator is a general purpose graphics processor (GPGPU), which may also be referred to as a machine learning accelerator.

In some examples, in order to establish a trust relationship between a device and a trusted VM, certain architectures require the trusted VM and/or a trusted security manager (e.g., Trusted Execution Environment (TEE) security manager (TSM)) to create a secure communication session between the device and the TSM (e.g., for the trust domain manger to allow a particular trusted VM to use the device or a subset of function(s) of the device). For these examples, in order to establish the trust relationship between a device and a trusted VM, certain architectures require the trusted VM and/or a TSM to use various specifications to include, but not limited to, a Distributed Management Task Force (DMTF) Secure Protocol and Data Model (SPDM) specification such as the SPDM specification, DSP0274, Ver. 1.0.1, published in March, 2021 by the Platform Management Components Intercommunication (PMCI) working group of the DMTF (hereinafter "the SPDM specification") to authenticate the device (e.g., and collect device measurement).

The TEE and/or the TSM may also use protocols and techniques described in the Peripheral Component Interconnect Special Interest Group (PCI-SIG) and/or the Trusted Device Interface Security Protocol (TDISP) to communicate with a device security manager (DSM) to manage a device's virtual function(s). One example of a TDISP implementation is the "TDX connect architecture", although the underlying principles of the invention are not limited to any particular TDISP implementation.

According to some examples, a SPDM messaging protocol used according to the SPDM specification defines a request-response messaging model between two endpoints to perform a message exchange, for example, where each SPDM request message shall be responded to with an SPDM response message. For these examples, an endpoint's (e.g., device's) "measurement" describes the process of calculating a cryptographic hash value of a piece of firmware/software or configuration data and tying the cryptographic hash value with the endpoint's identity through a use of digital signatures. This allows an authentication initiator to establish that the identity and measurement of the firmware/software and/or a configuration currently running on the endpoint.

In some examples, to help enforce security policies for a trusted VM, a secure processor mode such as Secure-Arbitration Mode (SEAM) is used by the host processor to implement a digitally signed, but not encrypted, security-services module. For example, a trust domain manager (TDM) may be hosted in a reserved, memory space identified by a SEAM-range register (SEAMRR). For this example, the processor may only allow access to a SEAM-memory range by software executing inside the SEAM-memory range, and all other software accesses and direct-memory access (DMA) from devices to this SEAM-memory range are aborted. In some examples, a SEAM module does not have any memory-access privileges to other protected, memory regions in a compute/host platform, including the System-Management Mode (SMM) memory or protected memory (e.g., Intel^{®} Software Guard Extensions (SGX)).

TDISP message protocols may be used by a TEE security manager (TSM) in a confidential computing environment (e.g., an environment implementing TDX-IO or SEV-IO). Some implementations include a secure startup service module (S3M) of the SoC to establish secure communication sessions. In certain examples, a secure startup service circuit includes SPDM capability and stack/device attestation capability (e.g., to support TDX-IO, SEV-TIO, and other secure IO implementations).

While described within the context of some of these security architectures, the underlying principles of the invention are not limited to any particular security architecture. For example, the embodiments described below may be used with any confidential/secure computing technology. For example, AMD Secure Encrypted Virtualization (e.g., SEV/SEV-ES/SEV-SNP) may use a certain component (e.g., a Platform Security Processor (PSP)) thereof to implement a TSM including two parts: (i) a manager that enforces the TEE isolation, and (ii) the PSP that handles communications with the device security manager (DSM). For example, ARM^{®} Realm Management Extension (RME) may use a certain component (e.g., one ARM^{®} core of a plurality of ARM^{®} cores) thereof to implement a TSM, for example, a whole TSM including two parts: (i) a trust domain manager that enforces the TEE isolation, and (ii) the ARM^{®} core that handles communications with the device security manager (DSM).

Recently PCI-SIG has published the PCIe Integrity & Data Encryption (IDE) standard providing a solution for an end-to-end link encryption between PCIe Root ports and devices. The IDE standard is implemented in a new IDE layer between the transection layer and data link layer which uses cryptography mechanisms to encrypt all data sent for both sides of each link. IDE supports different sets of "selective" IDE streams and "link" IDE streams formed between different components. Each link IDE stream is a security channel in the corresponding link, and each selective IDE stream is an end-to-end security channel between devices (not necessarily in the same link and potentially over multiple links).

To ensure selective IDE stream security for transaction layer packets (TLPs), the IDE standard requires that the completion for a non-posted request must be transmitted on the same selective IDE stream as the selective IDE stream on which the request was transmitted by the device. The IDE "limited" stream feature has been introduced for reducing the performance tax due to IDE encryption. The limited stream feature allows a device to reduce the bandwidth and latency tax of encryption by encrypting only certain sensitive transactions instead of all transactions it sends to the root port.

### APPARATUS AND METHOD FOR TRUSTED ACCESS TO EXPANSION MEMORY BY MULTIPLE POTENTIALLY HETEROGENEOUS COMPUTE NODES

Memory capacity and bandwidth are becoming the primary bottleneck for high performance computing (HPC) and artificial intelligence/ machine learning (AI/ML) systems. CXL Type 3 Multiple Logical Device (MLD) implementations with memory pooling are currently used to scale up memory capacity beyond the classic host attached memories like DDR and HBM.

Supporting confidential computing on asymmetric types of memory (e.g., host attached and CXL attached memory) is a challenge. Host attached memory is commoditized and all confidential compute requirements for encryption is handled at the host. However, with CXL-attached memory, the encryption and confidentiality schemes are inconsistent, with devices supporting different combinations of link encryption, memory encryption, and device attestation.

Embodiments of the invention provide a solution to establish a trust boundary across these asymmetric devices and enable different CPUs, graphics processors, and accelerators (sometimes referred to as "XPUs") to be included in any CXL Type3 memory pooling architecture. This is achieved through a common Root of Trust across multiple nodes. In particular, multiple host processors and accelerators in the ecosystem rely on one "super-ROT" (Super Root of Trust or "SROT"). In some implementations, the super ROT is implemented with a microcontroller embedded in a CXL 2.0 switch which manages the CXL Type3 MLD devices (e.g., expansion memory devices). It may also be configured to manage allocation and deallocation of processor/accelerator workloads in the given pool of expansion memory for the processor/accelerator.

As used herein, the terms "binding" and "unbinding" refer to the process of allocating and deallocating pooled memory. In some embodiments, the pooled memory is provided by a CXL Type 3 MLD interconnection to a processor or accelerator workload (e.g., in response to a request generated by software). In some embodiments, a CXL switch is configured to couple heterogeneous devices (e.g., CPU, graphics processor, accelerator) to the pooled memory within the same trust boundary. In these embodiments, CXL switch can enumerate support for Type 3 MLD devices.

Some implementations of the invention rely on a host processor (e.g., CPU cores) to manage the requirement of encryption and decryption along the path to memory (referred to herein as host based encryption (HBE)). In some embodiments, HBE provides both local integrity and encryption/decryption. Local integrity is provided using an access control table (ACT) and a corresponding instruction set which tracks the ownership of each cache line entry during memory allocation.

In these embodiments, encryption/decryption is performed based on a KeyID corresponding to a given host physical address (HPA) which is used to encrypt and/or decrypt loads in an expansion memory originating from a trusted execution environment (e.g., a virtual machine corresponding to a trust domain or other form of trusted software). In some specific implementations, the KeyID is a trust domain extensions key (TDXKEY) or multi-key total memory encryption (MKTME) key, although the underlying principles of the invention are not limited to any specific type of trusted execution environment (TEE).

These embodiments provide a Trusted Device Interface Security Protocol (TDISP) implementation (e.g., TDX connect) within a CXL architecture (e.g., a CXL Type 3 architecture) by constructing a single trust boundary in a CXL switch across multiple nodes. Through the single trust boundary, allocation (binding) or deallocation (unbinding) of secure/non-secure application data in the memory pool of the expansion device memory is seamlessly managed. In some embodiments, the logical integrity of the data stored in the expansion device memory is achieved with a Host Based encryption (HBE) scheme in the IO path (i.e., in accordance with cxl.mem).

In some embodiments, multiple TDISP modules (e.g., TDX connect modules) are supported in CXL Type3 MLD devices integrated with the host based encryption scheme. These embodiments are scalable for use with XPU working models as well as accelerator enabled nodes such as Xe or any third party GPGPU (e.g., Nvidia H100 GPGPUs, AMD MI300 GPGPUs, etc). The scaling up and scaling down of nodes is managed in some embodiments with a super ROT via lookup table (LUT) entries.

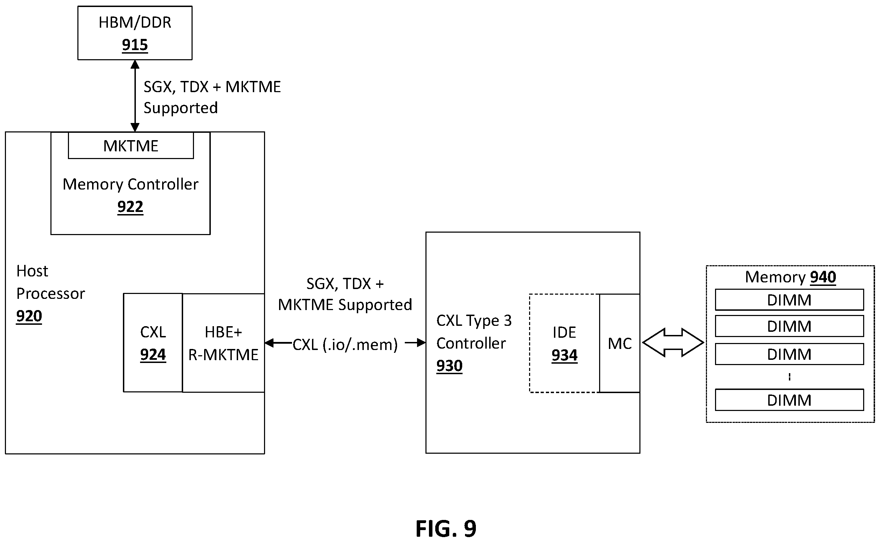

**Figure 9** illustrates an example implementation, including a host processor 920 with a local memory controller 922 to couple the host processor to a local memory 915 (e.g., an HBM or DDR memory) and a CXL interface 924 to couple the host processor to an extension memory 940 via a CXL Type 3 controller 930. As indicated, the CXL controller 930 may optionally support aspects of the PCIe Integrity & Data Encryption (IDE) standard (e.g., such as encrypted "link" IDE streams). The physical address space visible to the host processor 920 may include, for example, the on-die or host-connected memory 915 and the CXL Type 3 expansion memory 940. By way of example, and not limitation, if the on-chip or host attached memory 915 has a 2TB capacity and the expansion memory 940 has a 4TB capacity, then during the enumeration phase, the host processor 920 is notified of 6TB of available system memory.

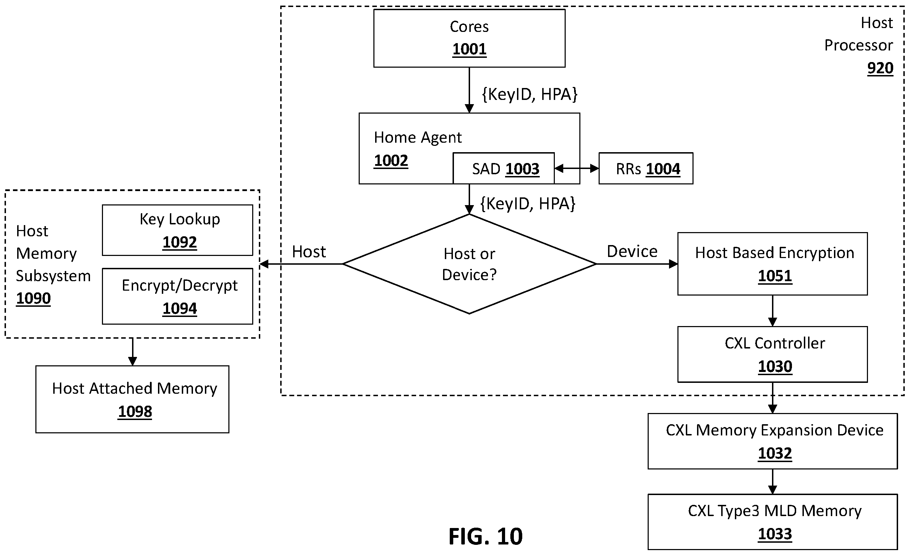

Referring to **Figure 10****,** one embodiment of the host processor 920 includes a plurality of cores 1001 coupled to a home agent 1002 which provides the cores with access to the host attached memory 1098 and the CXL Type 3 MLD memory 1033 (via the CXL memory expansion device 1032). In these embodiments, the home agent 1002 is configured to differentiate between the on-die/host-attached memory subsystem 1090 and the expansion memory device 1032. Specifically, the illustrated home agent 1002 includes source address decoder 1003 which performs address checks using range registers 1004 based on the Host Physical Address (HPA) provided with the request. The source address decoder 1003 uses the range registers 1004 to validate which memory path will accommodate the memory request: the host memory subsystem 1090 which provides access to host attached memory 1098 or the CXL controller 1030 which provides access to the CXL memory expansion device 1032 and CXL Type 3 MLD memory 1033.

In some embodiments, when the range register check indicates the host memory subsystem 1090, the encryption/decryption circuitry 1094 of the host memory subsystem 1090 performs encryption/decryption based on a corresponding encryption key identified via key lookup circuitry 1092. When a range register check indicates the CXL Type 3 expansion memory device 1032, host-based encryption 1051 is performed, managed by the host processor 920. In one embodiment, circuitry and instructions executed on the host processor 920 implement host-based encryption 1051, which tracks cache line ownership in an access control table (ACT), thereby maintaining logical integrity. Details for one embodiment of the host-based encryption 1051 are provided below.

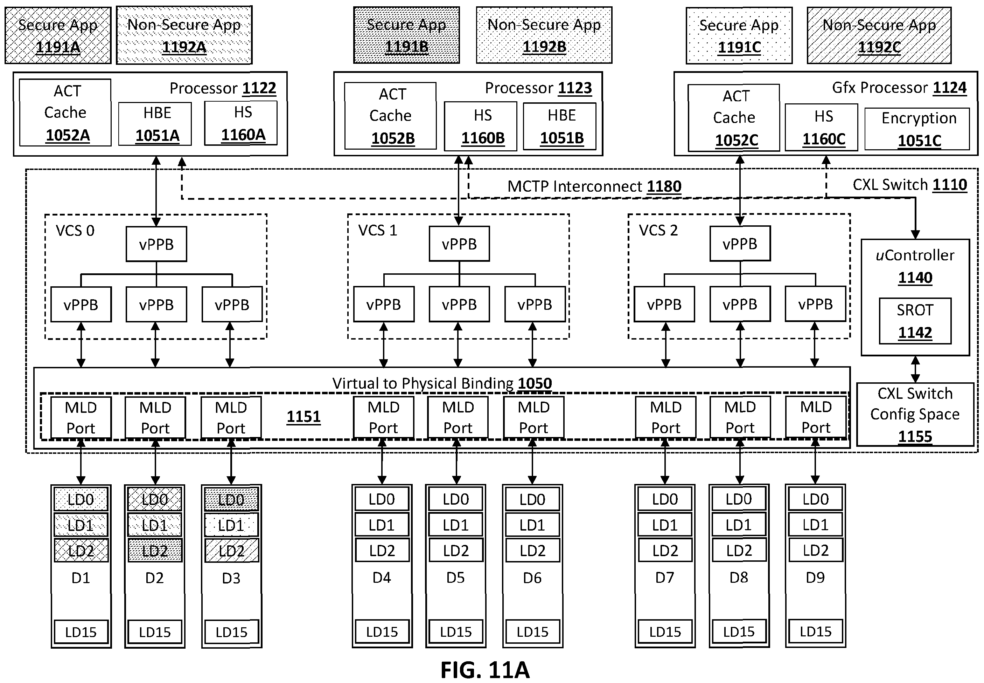

**Figure 11A** illustrates an example embodiment including two processors 1122-1123, each including a plurality of cores, and a graphics processor 1124 coupled to a CXL switch 1110. This is merely one example of an implementation; embodiments of the invention may be used with a variety of heterogeneous and homogeneous cores and processors. In the illustrated example, secure application 1191A and non-secure application 1192A are executed on processor 1122; secure application 1191B and non-secure application 1192B are executed on processor 1123; and secure application 1191C and non-secure application 1192C are executed on processor 1124. Each processor 1122-1123 includes host-based encryption (HBE) circuitry/logic 1051A-B, respectively, for performing encryption and decryption operations as described herein for memory transactions over the CXL device memory path (e.g., using a corresponding KeylD to indicate the relevant encryption key). The GPU encryption circuitry 1051C may also perform HBE, or may perform a different form of encryption (e.g., SME/AES-XTS). In some embodiments, host security circuitry 1160A-C, such as a security microcontroller, are coupled to or integral to the processors 1122-1124 and provide security services to implement the host-based encryption (HBE), integrity and data encryption (IDE), and other host-side security functions described herein.

In some implementations, the CXL switch 1110 includes a microcontroller 1140 to process requests from the processors 1122-1124 and transmit responses over a Management Component Transport Protocol (MCTP) interconnect. The MCTP interconnect may include a system management bus and/or a PCIe link which supports MCTP (e.g., MCTP over PCIe). In accordance with some embodiments, the applications 1191A-C, 1192A-C executing or otherwise associated with the processors 1122-1124 transmit memory requests to the microcontroller 1140 over the MCTP interconnect 1180 (e.g., allocation/deallocation requests as described herein).

The MCTP payload of a memory allocation/deallocation request can include one or more of: an application ID indicating the corresponding application 1191A-C, 1192A-C which generated the request; a host ID indicating the corresponding processor 1122-1124; a bit to indicate whether the requesting application is a secure/trusted application (e.g., 1191A-C) or a non-secure/untrusted application (e.g., 1191A-C); an amount of memory requested (e.g., 2GB, 4GB, etc); and a bit to indicate whether the request is to bind/allocate memory or unbind/deallocate memory.

Virtual-to-physical binding circuitry/logic 1050 includes a plurality of Multiple Logical Device (MLD) ports 1151 providing access to a corresponding plurality of memory expansion devices, D1-D9. Once portions of the memory expansion devices D1-D9 are mapped, memory access requests originating from applications 1191A-C, 1192A-C (e.g., load or store operations) can be directed towards the memory expansion devices D1-D9.

In some embodiments, in response to a request for expansion memory originating from a secure app 1191A-C or non-secure app 1192A-C, the microcontroller 1140 allocates one or more logical devices (LDs), which are logical partitions of the memory expansion devices D1-D9. In the illustrated example, each device D1-D9 is partitioned into 16 logical devices, LDO-LD15, accessible via a corresponding MLD port 1151. The microcontroller 1140 can individually allocate sets of the LDs to applications as needed. In some implementations, the microcontroller 1140 maintains a mapping of applications to logical devices within a super root of trust (SROT) 1142 comprising a lookup table, updating the lookup table after each allocation or deallocation of logical devices. Different shading patterns in **Figure 11A** indicate an example set of allocations between applications 1191A-C, 1192A-C and logical devices (i.e., with the same pattern indicating that the logical device is allocated to the corresponding application). For example, LD0 of device D1 is allocated to non-secure app 1192B, and LD1 of device D1 and LD1 of device D2 are allocated to non-secure application 1192A.

In some embodiments, when a range check issued by a processor 1122-1124 indicates that a request is directed to one of the CXL memory devices D1-D9, host-based encryption circuitry/logic 1051A-B is used in accordance with a corresponding host security circuitry/controller 1160A-C to encrypt the memory accesses. Encryption circuitry/logic 1051C may implement host-based encryption or another type of encryption (e.g., SME/AES-XTS). For example, host-based encryption (and/or the other type of encryption, if used) may be performed when the CXL memory expansion devices D1-D9 do not natively support IDE and/or memory encryption.

For the architecture to seamlessly scale up and down with multiple processors 1122-1124, some embodiments implement techniques to allow the processors to interact within a single trust boundary. In these embodiments, the SROT 1142 of the microcontroller 1140 brings the various processors/nodes into a common trust boundary.

In one embodiment, to maintain the integrity of the application data that is being routed by each of the processors 1122-1124 to the CXL switch 1110 for allocation/deallocation in any of the expansion devices D1-D9, the host-based encryption circuitry/logic 1051A-B of each respective processor and encryption circuitry 1051C tracks cache line ownership based on host physical addresses. As described further below, for example, the HBE circuitry/logic 1051A-B and encryption circuitry 1051C may cache portions of an access control table (ACT) 1052A-C, respectively (e.g., generated by a secure arbitration mode (SEAM) of a corresponding processor) to determine characteristics of each application. If the application is trusted, then HBE may access the corresponding keys to encrypt/decrypt memory accesses (e.g., TDXKEYs and MKTME keys in some embodiments). For example, a processor in secure arbitration mode (SEAM) generates entries in the ACT 1052A-C while allocating a host physical address for trusted workloads.

In some embodiments, each processor 1122-1124 has its own, individual root of trust for establishing a secure flow within its respective host boundary. The root of trust, for example, may be the host security circuitry 1160A-C, of each respective processor 1122-1124. Each instance of the security circuitry 1160a-c may be a security microcontroller, although various types of security circuitry may be used (e.g., a converged security and management engine (CSME), embedded security element (ESE), secure processor (SP), or other dedicated security circuitry).

In **Figure 11A****,** the SROT 1142 managed by the microcontroller 1140 establishes the trust boundary between the processors 1122-1124, with processors exchanging messages with the microcontroller 1140 over the MCTP interconnect 1180 (e.g., an SMBUS interface or PCIe interface). As described further below, the trust boundary is established via information provided in MCTP packets.

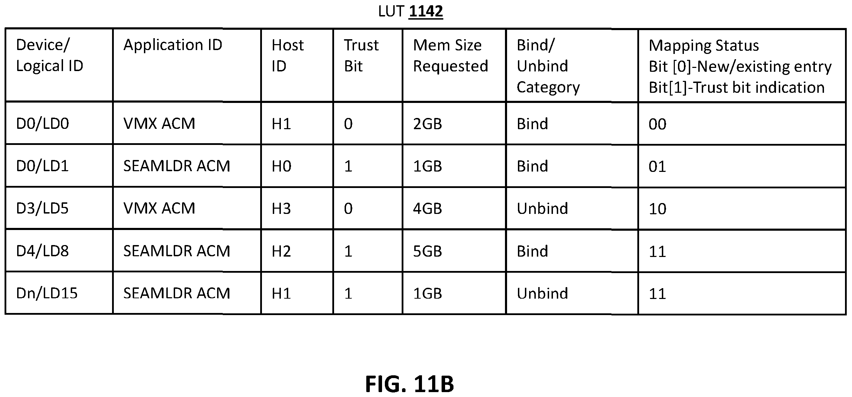

**Figure 11B** illustrates an example of the lookup table 1147 which includes a plurality of entries (rows), each of which is associated with a particular memory allocation. The fields in each entry include a device/logical device identifier (ID) to indicate a particular logical device of a particular device; an application ID to indicate the application to which the logical device is allocated; a host ID to indicate the associated node/processor; a trust bit to indicate if the application is trusted or non-trusted; an indication of the memory size requested by the application; a bind/unbind indication (indicating if memory is being allocated/deallocated); and a mapping status comprising a new/existing entry bit and a trusted/untrusted bit.

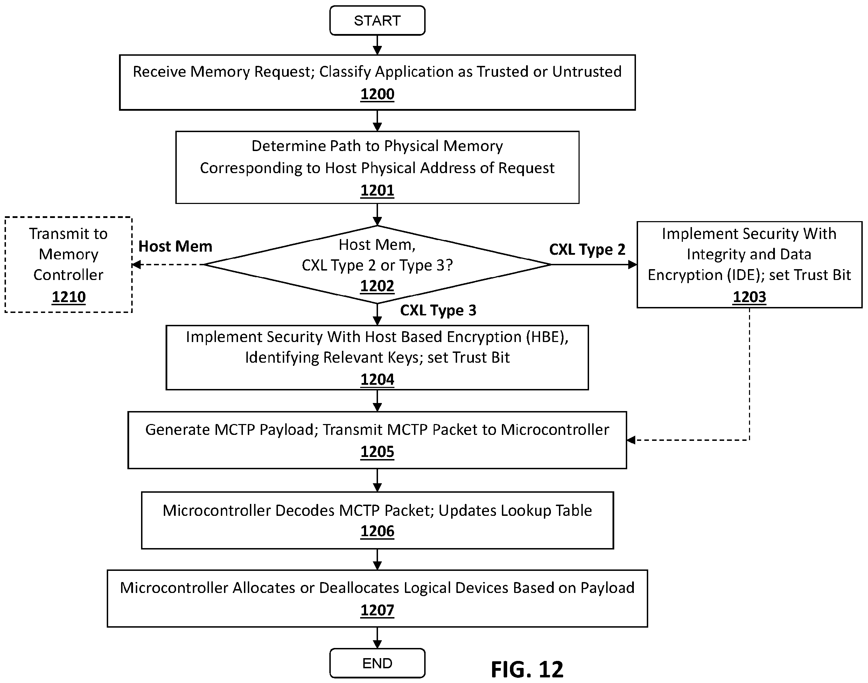

A method in accordance with one embodiment is illustrated in **Figure 12****.** The illustrated method may be implemented using the various architectural details described herein, but is not limited to these specific processor or system architecture.

At 1200, the corresponding application is classified based on whether it is trusted or untrusted. For example, the application may be trusted when the processor is operating in a Secure-Arbitration Mode (SEAM) and generating trusted API calls (e.g., TDX API calls). In this environment, SEAMOPS Leaf0 (CAPABILITIES) may be used to append the API call information into the MCTP format described herein. An untrusted application operating, for example, in a virtualized execution environment may generate API calls initiated by the hypervisor which manages the virtualized environment for the application (e.g., VMX API calls).

At 1201, in response to the request, a corresponding path to a physical memory is determined based on the host physical address associated with the request. For example, a table or other data structure maintains a mapping of host physical addresses to different memory types which can include, for example, CXL Type 2 memory devices, CXL Type 3 memory devices, and host-connected memory devices (e.g., system DRAM such as HBM or DDR). As mentioned, in some embodiments, the range check is performed by the source address decoding logic 1003 in Home Agent 1002 (e.g., using the range registers 1004).

If the request is directed to host memory (e.g., a system memory such as HBM or DDR DRAM), then at 1210, the memory request is transmitted to the corresponding memory controller of the processor. Note that this decision may have already been made further up the processing pipeline (e.g., prior to the start of the illustrated method). As such, the option to transmit to the memory controller is optional at this point (as indicated by the dotted lines).

If the request is directed to a CXL type 2 device, determined at 1202, then security may be implemented with integrity and data encryption (IDE) at 1203 and the trust bit (e.g., a TEE bit) is set to indicate whether the application is trusted or untrusted (based on the determination at 1200). If the request is directed to a CXL Type 3 device, then at 1204, security is implemented with host based encryption (HBE) and the trust bit is set to trusted or untrusted. The host-based encryption circuitry 1051A-B and encryption circuitry 1051C may determine characteristics of the application via the cached access control table (ACT) located within the HBE boundary. If the application is trusted, then HBE may rely on the corresponding keys (e.g., TDXKEYs and MKTME keys) to encrypt/decrypt memory access. For example, a processor in secure arbitration mode (SEAM) generates entries in the ACT while allocating a host physical address for trusted workloads.

At 1205, the MCTP payload is generated along with the data encrypted by host-based encryption. In some implementations, this payload information is appended by security circuitry and transmitted via MCTP over SMBUS or PCIe. In one embodiment, a particular payload format (e.g., generated by SEAM OPS) is used by each processor 1122-1124 to communicate and establish a connection with the super root of trust/LUT 1142. As mentioned, the payload information can include one or more of: an application ID, a host ID, a secure/non-secure indication, an amount of requested memory, and an indication of bind/unbind request.

At 1206, the microcontroller 1140 in the CXL switch 1110 decodes the MCTP packet, including the appended payload. The microcontroller 1140 then accesses the appropriate entries in the lookup table based on the MCTP packet. At 1207, the microcontroller 1140 allocates or deallocates logical devices based on the payload.

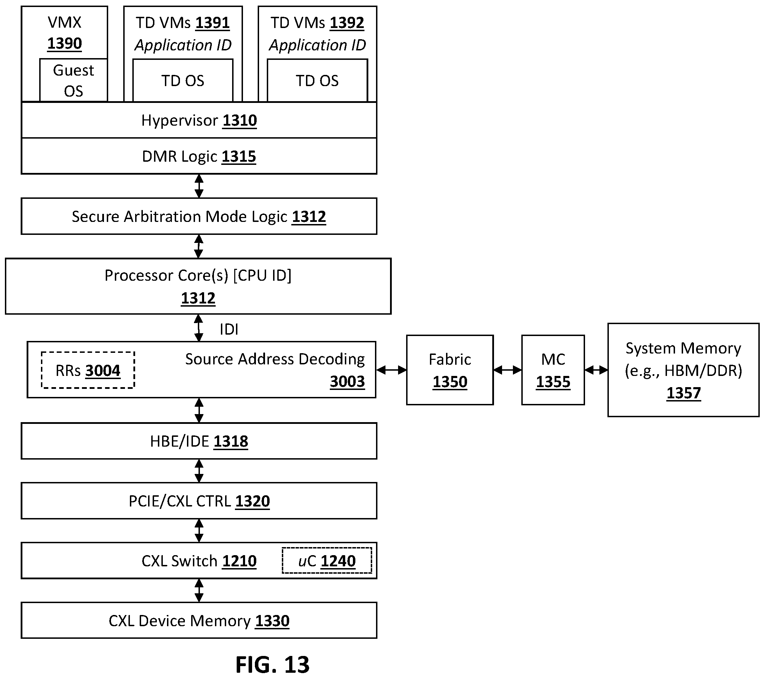

**Figure 13** illustrates one embodiment of circuitry and logic between trusted/untrusted software 1390-1392, CXL device memory 1330, and HBM/DDR memory 1357. In this example, the software includes a VMX virtual execution environment 1390 running a guest OS, and two trusted virtual machines 1391-1392 running trusted operating systems, all of which are managed by a hypervisor 1310. The hypervisor 1310 makes secure and non-secure API calls provided by dynamic memory range (DMR) logic 1312. By way of example, and not limitation, trusted API calls may include TDX API calls in secure mode and VMX API calls in non-secure mode.

The API calls are processed by secure arbitration mode (SEAM) logic 1312 operating on one or more processor cores 1312 (identified via a unique CPU ID). Source address decoding circuitry 1303 (e.g., shared by the processor cores 1312, in a region external to the cores) decodes addresses based on range information specified within one or more range registers 3004.

The source address decoding circuitry 1312 may access the range registers 3004 to determine whether a request will be directed to the processor system memory, such as HBM/DDR memory 1357, or the CXL device memory 1330. If the request is directed to processor system memory, then the MCTP packet format may not be required. For example, when a host physical address (HPA) allocated by the secure arbitration mode logic 1312 belongs to system memory 1357 and the corresponding trust bit indicates that the application data is to be encrypted or decrypted, the MTCP format is not required as this memory is within the processor's trust boundary. In some embodiments, the memory security engine in the memory controller 1355 or fabric 1350 manages encryption and decryption.

If the request is directed to CXL device memory 1330, the MCTP packet format is required. In these instances, the payload information is generated by the HBE/IDE logic 1318 of the processor and sent via MCTP. This embodiment may be configured by the secure arbitration mode logic 1312, which programs the required keys for encryption/decryption. Ownership information per cache line entry is obtained by implementing a local cache in HBE/IDE logic 1318 which will be coherent with the system memory 1357 using ISA-based techniques (e.g., software-based coherency).

In one embodiment, PCIE/CXL control logic 1320 uses MCTP over PCIE to communicate the MCTP payload to the CXL switch 1210. The microcontroller 1240 in the CXL switch 1210 manages the lookup table as described herein to establish the super root of trust and responsively allocates and deallocates logical devices of the CXL device memory 1330 (e.g., as described with respect to **Figure 11A**).

In some embodiments, the CXL switch platform enumeration operates as follows. During the enumeration process for multiple processors accessing a pool of CXL memory devices, the CXL switch will perform at least some of the enumeration operations. In particular, referring again to Figure 11A, the CXL switch config space 1155 (e.g., one or more configuration registers) stores data indicating the number of hosts that are connected to the CXL upstream ports. The microcontroller 1140 of the CXL switch 1110 manages the detection of CXL Type 3 MLD devices, D1-D9, and performs the enumeration of these devices. The microcontroller 1140 also determines the memory size and the logical partitions of each device (e.g., logical devices 0-15 in each illustrated device) by accessing the config space 1155 during the enumeration.

Additional details for allocation and deallocation by the CXL switch in accordance with some embodiments are provided below. These details may be implemented based on the MCTP payload received by the microcontroller.

The two bits below indicate the possible states the first time an entry in the lookup table is updated based on a received request:
- 00 :: unmapped region
- 01 :: non secure mapped
- 10 :: Secure mapped
- 11 :: undefined

In one embodiment, the microcontroller 1140 follows a set of rules when transitioning between certain states. For example, the transition from the secure mapped state (10) to the non-secure mapped state (01) for any bind or unbind flow, represents unbinding of a secure application's slot in a Type3 MLD device and binding the same slot to a non-secure application. Consequently, one embodiment of the microcontroller 1140 only performs this transition after initiating a flow flush (e.g., flushing the data from the secure application's slot before allocating to the non-secure application). This will prevent the secure application data from being exposed to the non-secure application during reallocation.

Additionally, the transition from non-secure mapped (01) to secure mapped (10) represents an unbinding of a non-secure application's slot in the Type3 MLD device and binding the same slot to a secure application. In this case, the microcontroller similarly only performs the transition after initiating a flow flush, to prevent the non-secure application data from being exposed to the secure application during reallocation. This implementation addresses the threat model where a non-secure application with a malicious configuration attempt to achieve secure mode privileges. The flow flush operation ensures that the secure application code will not be exposed.

In addition to the foregoing set of rules, one embodiment of the microcontroller 1140 ensures that the request for memory by a processor does not exceed the available device memory. In response to such a request, the microcontroller 1140 notifies the requesting processor of the error via an MCTP Packet.

In one implementation, the Host Based Encryption (HBE) circuitry/logic 1051A-B (and potentially 1051C) described above operates as follows. The device attached to the processor is accessed over a CXL link which is not inherently encrypted. For example, CXL Type 3 expansion devices do not natively support SPDM sessions or other encryption protocols. In some embodiments, encryption is achieved using host-based encryption (HBE) as described herein. In addition to encryption, HBE logical integrity is used in some embodiments to maintain the integrity of the data by tracking the ownership across the cache line entry. These transactions are provisioned with a key for the host physical address being targeted in the CXL Type3 MLD device side of memory. In some embodiments, the HBE circuitry/logic 1051A-B (and potentially 1051C) supports the following features for Type3 CXL devices:
- AES 256 XTS encryption (e.g., using MKTME/MSE circuitry for the cryptographic block).
- Multikey support, such as available with 1K keys
- Range based key selection, such as maintaining a key for every 4KB page.
- Logical Integrity, achieved by tracking the trusted execution environment (e.g., trust domain) ownership bit for each cache line entry.
- An access control table (ACT), such as the ACTRR stored in the protected region in DRAM, which indicates whether each host physical addresses maps to a trusted or non-trusted domain. As mentioned, HBE may maintain a local cache of the access control table entries to select the required keys for encrypting/decrypting the data packets in the cxl.mem paths.

In some embodiments, when a trust domain is created, the SEAM logic 1312 invokes the processor's security hardware to pick a random KEYID for the allocated trust domain page. The processor/core memory management unit (MMU) posts the secure EPT. The KEYID is picked based on this scheme, e.g., the guest physical address (GPA) will indicate that this is a private page so it enters the secure EPT, then secure EPT allocates a KEYID for the incoming host physical address (HPA).

The core 1312 transmits a request with this HPA[51:0] as [TDXKEYID, HPA[41:0] and the key lookup table uses this KEYID for the HPA that belongs to the created trust domain. In some implementations, the SEAM logic 1312 also ensures that no two private trust domain spaces share the same key (e.g., during programming, SEAM performs a conditional check to ensure that each KEYID is unique).

The source address decoding logic 3003 checks the range register(s) 3004 to determine whether the incoming address belongs to a Type 2 range or a type 3 range or system memory (e.g., HBM). Once this is determined, the following programming is performed:
HBM Range: MKTME implementation of MSE IP behavior.
Type 3 Range: As described above, HBE is enabled for memory devices attached to a type3 range. The HPA flowing with the KEYID as part of the MSB bits is used by the HBE circuitry (e.g., 1318) to pick the key slot. The trust domain now uses the assigned key by the SEAM logic 1312 programming flow to encrypt/decrypt the data in the CXL Type3 Device (e.g., 1330). Thus, a trusted private space is allocated in the CXL Type 3 device.

In some implementations, HBE circuitry 1318 reuses the trust bit (or "TEE bit") generated by source address decoding (SAD) circuitry 3003 to determine whether a request is secure or non-secure. In a TDX implementation, a TDX detection register detects whether the particular transaction is for TDX (trusted) or non-TDX (non-trusted). So, the TDX detection can be used to identify whether a private key is needed for trusted private memory access or a shared key.

In some embodiments, the access control table (e.g., ACTRR) is implemented as a carve-out in system memory maintained by a particular SEAM instruction (ACT_en or ACT enable). The HBE circuitry 1318 maintains a local cache with ACT entries and performs a local cache lookup to identify the needed entry. The HBE circuitry 1318 determines if the incoming HPA is associated with trusted or non-trusted ownership based on the cache entry, which can be maintained for each 4KB page. For example, each ACT entry may store an "owner bit" for each corresponding 4K memory range in memory, defining "ownership" of the 4K page (e.g., TD/Private data or non-secure "shared data"). Software coherency is implemented between the ACT in memory and the HBE circuitry local cache.

A cryptographic block uses the KEYID along with the trust bit indication to pick the key used for encryption of the trusted private data stored into the CXL type3 device memory.

Merging the super root of trust concept with the HBE circuitry implementation described herein allows multiple hosts under a single root of trust for secure workloads in CXL Type 3 MLD devices using CXL 2.0 switch implementations. Supporting encryption on the host allows for reduced cost CXL devices, integration of 3rd party accelerator devices in a heterogeneous implementation for confidential computing workloads (including AI/ML workloads), and expansion of the TDX connect architecture into a wider CXL market.

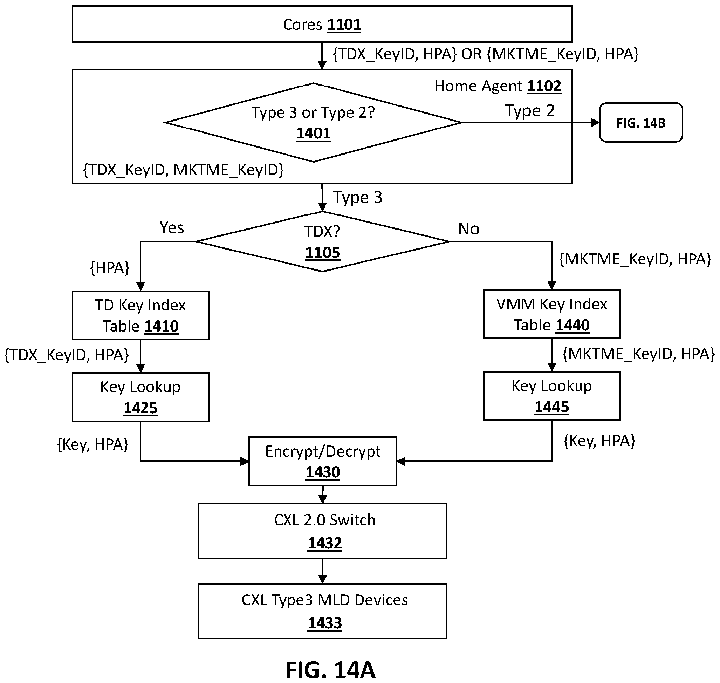

**Figures 14A-B** illustrate a specific implementation including some of the security techniques described herein. A core 1101 is illustrated generating a request to a home agent 1102, the application running on the host (e.g., the core 1101) can initiate traffic with MKTME_KEYID or TDXKEYID based on the applications privilege status (e.g., from VMX or TD mode). The home agent first determines if the request is for a Type 3 or a Type 2 memory device. If the request is directed to a Type 3 device and is a TDX request, determined at 1105, then a lookup is performed in a TD key index table 1410 to determine a KeyID using the host physical address (HPA) of the request. The KeyID and HPA are used for a key lookup to determine the encryption key at 1425, which is used for encryption/decryption 1430 for accessing a CXL Type 3 MLD device 1433 via a CXL 2.0 switch 1432.

If the request is a non-TDX request, then the MKTME_KeyID and HPA are used to access a VMM key index table 1440 to locate a KeyID, which is then used to perform a lookup in a key lookup table 1445 to determine an encryption key associated with the HPA, which is then used for encryption/decryption 1430 for accessing the CXL Type 3 MLD device 1433 via the CXL 2.0 switch 1432.

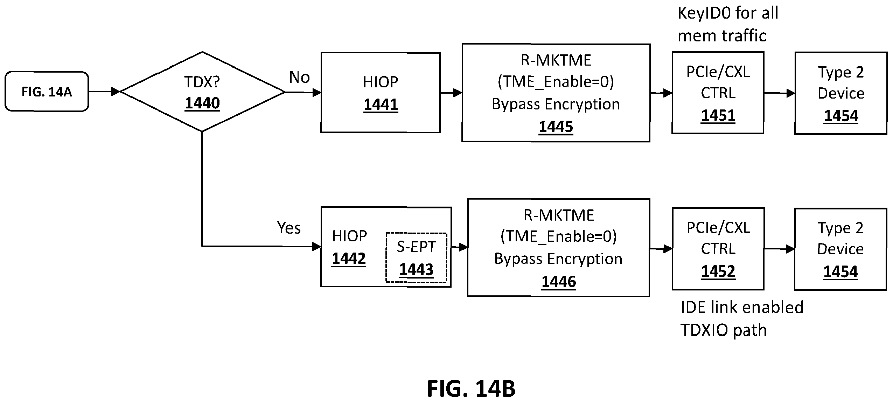

**Figure 14B** illustrates operation for a Type 2 CXL device. If the request is not a TDX request (e.g., not from a trust domain), then it is passed through the host IO processing circuitry 1441, and bypassing encryption with MKTME circuitry 1445 to access the type 2 device 1454 via PCIe/CXL control circuitry 1451. If the request is a TDX request (e.g., from a trust domain), then it is passed through the host IO processing circuitry 1446 which accesses a secure EPT 1443 for memory translations. The request again bypasses encryption with MKTME circuitry 1445. However, the PCIe/CXL control circuitry 1452 supports IDE link encryption for requests from trust domains targeting type 2 devices. Thus, accesses to the type 2 device 1454 are encrypted/decrypted via an IDE link.

Note that the terms "circuit" and "circuitry" are used interchangeably herein. As used herein, these terms and the term "logic" are used to refer to alone or in any combination, analog circuitry, digital circuitry, hard wired circuitry, programmable circuitry, processor circuitry, microcontroller circuitry, hardware logic circuitry, state machine circuitry and/or any other type of physical hardware component. Embodiments may be used in many different types of systems. For example, in one embodiment a communication device can be arranged to perform the various methods and techniques described herein. Of course, the scope of the present invention is not limited to a communication device, and instead other embodiments can be directed to other types of apparatus for processing instructions, or one or more machine readable media including instructions that in response to being executed on a computing device, cause the device to carry out one or more of the methods and techniques described herein.

### EXAMPLES

The following are example implementations of different embodiments of the invention.

Example 1. An apparatus, comprising: a plurality of cores of a host processor; a host processor memory subsystem to provide access to a host processor memory; a home agent to provide access by the plurality of cores to the host processor memory subsystem and an expansion memory subsystem, the home agent including a source address decoder to decode memory requests generated from the plurality of cores to determine whether the memory requests are to be directed to the host processor memory subsystem or the expansion memory subsystem; the host processor memory subsystem to perform encryption and decryption based on a first key identified via key lookup circuitry for memory requests directed to the host processor memory subsystem; and host-based security circuitry to encrypt and decrypt memory requests directed to the expansion memory subsystem, the host-based security circuitry to perform the encryption and decryption based on a second key stored in a cache maintained by the host-based security circuitry.

Example 2. The apparatus of example 1, wherein the expansion memory subsystem is to couple the plurality of cores to a CXL Type 3 multiple logical device (MLD) memory.

Example 3. The apparatus of examples 1 or 2, wherein the expansion memory subsystem comprises: switching circuitry configurable to couple at least one memory expansion device to the plurality of cores; a microcontroller associated with the switching circuitry to securely partition the at least one memory expansion device into a plurality of logical devices and to allocate subsets of the logical devices to applications executed on the plurality of cores; and tracking circuitry store data associated with the subsets of the logical devices allocated to the applications.

Example 4. The apparatus of any of examples 1-3, wherein the tracking circuitry comprises a lookup table to store a plurality of entries, each entry to store data associated with one of the subsets of the logical devices allocated to one of the applications.

Example 5. The apparatus of any of examples 1-4, wherein each entry is to store one or more of: an application identifier (ID) indicating an application associated with a corresponding expansion memory request; a host ID indicating a corresponding processor; a bit to indicate whether the corresponding application is a trusted application or an untrusted application; an indication of an amount of expansion memory requested; and one or more bits to indicate whether the request is to bind/allocate memory or unbind/deallocate memory of the expansion memory device.

Example 6. The apparatus of any of examples 1-5, wherein the lookup table is to be used as a shared root of trust for the host processor and one or more additional processors coupled to the switching circuitry.

Example 7. The apparatus of any of examples 1-6, wherein the host-based security comprises host-based encryption circuitry to encrypt and decrypt memory requests directed to the expansion memory subsystem based on the second key, wherein the cache comprises a cache of entries of an access control table (ACT), the ACT to be stored in a protected region of memory accessed via the host processor memory subsystem.

Example 8. The apparatus of any of examples 1-7 wherein the ACT is to store keys associated with trusted applications executed on the plurality of cores.

Example 9. A method comprising: receiving memory requests from a plurality of cores; decoding memory requests generated from the plurality of cores to determine whether the memory requests are to be directed to a host processor memory subsystem or an expansion memory subsystem; performing, by the host processor memory subsystem, encryption and decryption based on a first key identified via key lookup circuitry for memory requests directed to the host processor memory subsystem; and performing, by host-based security circuitry, encryption and decryption based on a second key stored in a cache maintained by the host-based security circuitry for memory requests directed to the expansion memory subsystem.

Example 10. The method of example 9, wherein the expansion memory subsystem is to couple the plurality of cores to a CXL Type 3 multiple logical device (MLD) memory.

Example 11. The method of examples 9-10, wherein the expansion memory subsystem comprises switching circuitry configurable to couple at least one memory expansion device to the plurality of cores, the method further comprising: securely partitioning the at least one memory expansion device into a plurality of logical devices; allocating subsets of the logical devices to applications executed on the plurality of cores; and tracking allocations of the subsets of the logical devices by storing data associated with the subsets of the logical devices allocated to the applications.

Example 12. The method of any of examples 9-11, wherein the data associated with the subsets of the logical devices are stored in entries of a lookup table, each entry to store data associated with one of the subsets of the logical devices allocated to one of the applications.

Example 13. The method of any of examples 9-12, wherein each entry is to store one or more of: an application identifier (ID) indicating an application associated with a corresponding expansion memory request; a host ID indicating a corresponding processor; a bit to indicate whether the corresponding application is a trusted application or an untrusted application; an indication of an amount of expansion memory requested; and one or more bits to indicate whether the request is to bind/allocate memory or unbind/deallocate memory of the expansion memory device.

Example 14. The method of any of examples 9-13, further comprising: using the lookup table as a shared root of trust for the host processor and one or more additional processors coupled to the switching circuitry.

Example 15. The method of any of examples 9-14, wherein the host-based security comprises host-based encryption circuitry to encrypt and decrypt memory requests directed to the expansion memory subsystem based on the second key, wherein the cache comprises a cache of entries of an access control table (ACT), the ACT to be stored in a protected region of memory accessed via the host processor memory subsystem.

Example 16. The method of any of examples 9-15, wherein the ACT is to store keys associated with trusted applications executed on the plurality of cores.

Example 17. A machine-readable medium having program code stored thereon which, when executed by a machine, causes the machine to perform operations, comprising: receiving memory requests from a plurality of cores; decoding memory requests generated from the plurality of cores to determine whether the memory requests are to be directed to a host processor memory subsystem or an expansion memory subsystem; performing, by the host processor memory subsystem, encryption and decryption based on a first key identified via key lookup circuitry for memory requests directed to the host processor memory subsystem; and performing, by host-based security circuitry, encryption and decryption based on a second key stored in a cache maintained by the host-based security circuitry for memory requests directed to the expansion memory subsystem.

Example 18. The machine-readable medium of example 17, wherein the expansion memory subsystem is to couple the plurality of cores to a CXL Type 3 multiple logical device (MLD) memory.

Example 19. The machine-readable medium of examples 17 or 18, wherein the expansion memory subsystem comprises switching circuitry configurable to couple at least one memory expansion device to the plurality of cores, the machine-readable medium further comprising program code to cause the machine to perform the operations of: securely partitioning the at least one memory expansion device into a plurality of logical devices; allocating subsets of the logical devices to applications executed on the plurality of cores; and tracking allocations of the subsets of the logical devices by storing data associated with the subsets of the logical devices allocated to the applications.

Example 20. The machine-readable medium of any of examples 17-19, wherein the data associated with the subsets of the logical devices are stored in entries of a lookup table, each entry to store data associated with one of the subsets of the logical devices allocated to one of the applications.

Example 21. The machine-readable medium of any of examples 17-20, wherein each entry is to store one or more of: an application identifier (ID) indicating an application associated with a corresponding expansion memory request; a host ID indicating a corresponding processor; a bit to indicate whether the corresponding application is a trusted application or an untrusted application; an indication of an amount of expansion memory requested; and one or more bits to indicate whether the request is to bind/allocate memory or unbind/deallocate memory of the expansion memory device.

Example 22. The machine-readable medium of any of examples 17-21, further comprising program code to cause the machine to perform the operations of: using the lookup table as a shared root of trust for the host processor and one or more additional processors coupled to the switching circuitry.

Example 23. The machine-readable medium of any of examples 17-22, wherein the host-based security comprises host-based encryption circuitry to encrypt and decrypt memory requests directed to the expansion memory subsystem based on the second key, wherein the cache comprises a cache of entries of an access control table (ACT), the ACT to be stored in a protected region of memory accessed via the host processor memory subsystem.

Example 24. The machine-readable medium of any of examples 17-23, wherein the ACT is to store keys associated with trusted applications executed on the plurality of cores.

Embodiments may be implemented in code and may be stored on a non-transitory storage medium having stored thereon instructions which can be used to program a system to perform the instructions. Embodiments also may be implemented in data and may be stored on a non-transitory storage medium, which if used by at least one machine, causes the at least one machine to fabricate at least one integrated circuit to perform one or more operations. Still further embodiments may be implemented in a computer readable storage medium including information that, when manufactured into a SoC or other processor, is to configure the SoC or other processor to perform one or more operations. The storage medium may include, but is not limited to, any type of disk including floppy disks, optical disks, solid state drives (SSDs), compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

While the present invention has been described with respect to a limited number of embodiments, those skilled in the art will appreciate numerous modifications and variations therefrom. It is intended that the appended claims cover all such modifications and variations as fall within the true spirit and scope of this present invention.

## Claims

1. An apparatus, comprising:
a plurality of cores of a host processor;
a host processor memory subsystem to provide access to a host processor memory;
a home agent to provide access by the plurality of cores to the host processor memory subsystem and an expansion memory subsystem, the home agent including a source address decoder to decode memory requests generated from the plurality of cores to determine whether the memory requests are to be directed to the host processor memory subsystem or the expansion memory subsystem;
the host processor memory subsystem to perform encryption and decryption based on a first key identified via key lookup circuitry for memory requests directed to the host processor memory subsystem; and
host-based security circuitry to encrypt and decrypt memory requests directed to the expansion memory subsystem, the host-based security circuitry to perform the encryption and decryption based on a second key stored in a cache maintained by the host-based security circuitry.

2. The apparatus of claim 1, wherein the expansion memory subsystem is to couple the plurality of cores to a CXL Type 3 multiple logical device (MLD) memory.

3. The apparatus of claims 1 or 2, wherein the expansion memory subsystem comprises:
switching circuitry configurable to couple at least one memory expansion device to the plurality of cores;
a microcontroller associated with the switching circuitry to securely partition the at least one memory expansion device into a plurality of logical devices and to allocate subsets of the logical devices to applications executed on the plurality of cores; and
tracking circuitry store data associated with the subsets of the logical devices allocated to the applications.

4. The apparatus of claim 3, wherein the tracking circuitry comprises a lookup table to store a plurality of entries, each entry to store data associated with one of the subsets of the logical devices allocated to one of the applications.

5. The apparatus of claim 4, wherein each entry is to store one or more of: an application identifier (ID) indicating an application associated with a corresponding expansion memory request; a host ID indicating a corresponding processor; a bit to indicate whether the corresponding application is a trusted application or an untrusted application; an indication of an amount of expansion memory requested; and one or more bits to indicate whether the request is to bind/allocate memory or unbind/deallocate memory of the expansion memory device.

6. The apparatus of claim 5, wherein the lookup table is to be used as a shared root of trust for the host processor and one or more additional processors coupled to the switching circuitry.

7. The apparatus of any of claims 1 to 6, wherein the host-based security comprises host-based encryption circuitry to encrypt and decrypt memory requests directed to the expansion memory subsystem based on the second key, wherein the cache comprises a cache of entries of an access control table (ACT), the ACT to be stored in a protected region of memory accessed via the host processor memory subsystem.

8. The apparatus of claim 7 wherein the ACT is to store keys associated with trusted applications executed on the plurality of cores.

9. A method comprising:
receiving memory requests from a plurality of cores;
decoding memory requests generated from the plurality of cores to determine whether the memory requests are to be directed to a host processor memory subsystem or an expansion memory subsystem;
performing, by the host processor memory subsystem, encryption and decryption based on a first key identified via key lookup circuitry for memory requests directed to the host processor memory subsystem; and
performing, by host-based security circuitry, encryption and decryption based on a second key stored in a cache maintained by the host-based security circuitry for memory requests directed to the expansion memory subsystem.

10. The method of claim 9, wherein the expansion memory subsystem is to couple the plurality of cores to a CXL Type 3 multiple logical device (MLD) memory.

11. The method of claims 9 or 10, wherein the expansion memory subsystem comprises switching circuitry configurable to couple at least one memory expansion device to the plurality of cores, the method further comprising:
securely partitioning the at least one memory expansion device into a plurality of logical devices;
allocating subsets of the logical devices to applications executed on the plurality of cores; and
tracking allocations of the subsets of the logical devices by storing data associated with the subsets of the logical devices allocated to the applications.

12. The method of claim 11, wherein the data associated with the subsets of the logical devices are stored in entries of a lookup table, each entry to store data associated with one of the subsets of the logical devices allocated to one of the applications.

13. The method of claim 12, wherein each entry is to store one or more of: an application identifier (ID) indicating an application associated with a corresponding expansion memory request; a host ID indicating a corresponding processor; a bit to indicate whether the corresponding application is a trusted application or an untrusted application; an indication of an amount of expansion memory requested; and one or more bits to indicate whether the request is to bind/allocate memory or unbind/deallocate memory of the expansion memory device.

14. The method of claim 13, further comprising:
using the lookup table as a shared root of trust for the host processor and one or more additional processors coupled to the switching circuitry.

15. The method of any of claims 9 to 14, wherein the host-based security comprises host-based encryption circuitry to encrypt and decrypt memory requests directed to the expansion memory subsystem based on the second key, wherein the cache comprises a cache of entries of an access control table (ACT), the ACT to be stored in a protected region of memory accessed via the host processor memory subsystem.
